Europäisches Patentamt

European Patent Office

Office européen des brevets

(19)

(11) EP 0 846 309 B1

(12) **EUROPÄISCHE PATENTSCHRIFT**

(45) Veröffentlichungstag und Bekanntmachung des Hinweises auf die Patenterteilung:
**22.12.1999 Patentblatt 1999/51**

(21) Anmeldenummer: **96934392.0**

(22) Anmeldetag: **26.08.1996**

(51) Int Cl.[6]: **G06T 15/50**

(86) Internationale Anmeldenummer:
**PCT/DE96/01601**

(87) Internationale Veröffentlichungsnummer:
**WO 97/08660 (06.03.1997 Gazette 1997/11)**

(54) **BILDVERARBEITUNGSVERFAHREN ZUR SIMULATION EINER TIEFENSTRUKTUR UND ZUGEHÖRIGE VORRICHTUNG**

IMAGE PROCESSING METHOD FOR SIMULATING STRUCTURE IN RELIEF, AND DEVICE FOR CARRYING OUT THE METHOD

PROCEDE DE TRAITEMENT D'IMAGES DESTINE A LA SIMULATION D'UNE STRUCTURE EN RELIEF ET DISPOSITIF ASSOCIE

(84) Benannte Vertragsstaaten:
**CH DE GB LI**

(30) Priorität: **25.08.1995 DE 19532801**
**12.02.1996 DE 19606356**

(43) Veröffentlichungstag der Anmeldung:
**10.06.1998 Patentblatt 1998/24**

(73) Patentinhaber: **GMD-Forschungszentrum Informationstechnik GmbH**
**53757 Sankt Augustin (DE)**

(72) Erfinder:
- **WITTIG, Oliver**
  **D-10555 Berlin (DE)**
- **ERNST, Ines**
  **D-12557 Berlin (DE)**
- **JACKEL, Dietmar**
  **D-12279 Berlin (DE)**

(74) Vertreter: **Christiansen, Henning et al**
**Eisenführ, Speiser & Partner**
**Patentanwälte**
**Pacelliallee 43/45**
**14195 Berlin (DE)**

(56) Entgegenhaltungen:
**EP-A- 0 574 111**

- **9TH EUROGRAPHICS WORKSHOP ON GRAPHICS HARDWARE, 12.September 1994, OSLO, Seiten 48-57, XP002023249 JACKEL AND RÜSSELER: "a real time rendering system with normal vector shading"**
- **STATE OF THE ART COMPUTER GRAPHICS:VISUALIZATION AND MODELLING, 1991, Seiten 101-111, XP000614575 HECKBERT AND MORETON: "interpolation for polygon texture mapping and shading"**
- **IBM TECHNICAL DISCLOSURE BULLETIN, Bd. 36, Nr. 9A, September 1993, NEW YORK, US, Seiten 35-38, XP000395302 ANONYMOUS: "Rendering of 3D Image Via Interpolated Z-Buffer Gradient"**

EP 0 846 309 B1

## Beschreibung

Die Erfindung betrifft ein Bildverarbeitungsverfahren zur Simulation einer Tiefenstruktur bei der Darstellung von Objekten, die insbesondere aus mindestens einer Polygonfläche bestehen, gemäß dem Oberbegriff des Anspruchs 1 sowie eine Bildverarbeitungsvorrichtung gemäß dem Oberbegriff des Anspruchs 11 zur Durchführung des Bildverarbeitungsverfahrens.

In Computer-Grafiksystemen werden Körper in der Regel durch Gittermodelle nachgebildet. Jeder Körper ist dabei durch die Raumkoordinaten der Knotenpunkte des Gittermodells beschrieben. Zur Darstellung auf einem Bildschirm werden die Raumkoordinaten aus dem 3-dimensionalen Koordinatensystem beispielsweise durch Zentralprojektion in ein 2-dimensionales Bildschirm-Koordinatensystem umgerechnet.

Die Flächenelemente zwischen den Knotenpunkten werden dabei meist als ideal glatte Flächen ohne Unebenheiten dargestellt. Natürliche Oberflächen sind jedoch nicht glatt, sondern relativ uneben und strukturiert. So weist beispielsweise die Oberfläche der menschlichen Haut eine feine Porenstruktur auf. Die mit herkömmlichen Computer-Grafik-Systemen dargestellten Oberflächen wirken deshalb auf den Betrachter unnatürlich. Um einen natürlichen Oberflächeneindruck zu erzeugen, müßte das Gittermodell so weit verfeinert werden, daß der Abstand zwischen den Knotenpunkten kleiner ist als die zu modellierenden Unebenheiten. Dies würde jedoch die Anforderungen an Speicherkapazität und Rechenleistung des Computer-Grafiksystems extrem erhöhen.

Aus CATMULL, E.E.: Computer Display of Curved Surfaces, Proc. IEEE Conf. on Computer Graphics, Pattern Recognition an Data Structures, Los Angeles (May 1975) 11 ist ein Verfahren zur Simulation einer Tiefenstruktur bei der Darstellung von derartigen Oberflächen bekannt. Hierbei wird jedem Flächenelement des Gittermodells ein 2-dimensionales Bild der gewünschten Tiefenstruktur - im folgenden als Texturbild bezeichnet - überlagert. Die Helligkeit eines Flächenelements ist also nicht einheitlich, sondern variiert innerhalb des Flächenelements entsprechend dem Texturbild.

Sieht der Betrachter nun aus der gleichen Richtung auf das Flächenelement, aus der auch das Texturbild aufgenommen wurde und ist auch die Beleuchtung die gleiche wie bei der Aufnahme des Texturbildes, so erhält der Betrachter einen natürlichen Seheindruck von der Tiefenstruktur der Oberfläche.

Der Betrachter nimmt hierbei jedoch unabhängig von der Perspektive und der Beleuchtungsrichtung stets dasselbe Texturbild wahr. Die Winkel- und Richtungsabhängigkeit des Reflexionsverhaltens der Tiefenstruktur einer natürlichen Oberfläche wird also durch dieses Verfahren nicht nachgebildet. Die Oberfläche erscheint deshalb weiterhin als glatte Oberfläche, auf der lediglich eine Art Photo aufgebracht ist. Derartige Darstellungen wirken ähnlich unnatürlich wie Gegenstände, die mit einer Decorfolie beklebt sind, welche eine Oberflächenstruktur vorspiegeln soll.

Aus BLINN, J.F.: Simulation of Wrinkled Surfaces, Computer Graphics, 12(3), S. 286-292, Proc. SIGGRAPH '78 ist weiterhin ein Verfahren zur Simulation einer Tiefenstruktur bei der Darstellung von Oberflächen, bekannt, das auch die Perspektive des Betrachters und die Beleuchtungsrichtung berücksichtigt.

Hierzu wird zunächst für jedes Flächenelement die für das Reflexionsverhalten des Flächenelements maßgebende Flächennormale berechnet. Weiterhin wird eine Tiefenfunktion definiert, die die Erhebungen bzw. Vertiefungen - also die Tiefenstruktur der Oberfläche - an jedem Punkt des Flächenelements definiert. Aus der Flächennormale und der Tiefenfunktion wird dann durch partielle Ableitungen der lokale Normalenvektor für jeden Punkt des Flächenelements berechnet. Wegen der Winkel- und Richtungsabhängigkeit des Reflexionsverhaltens variiert die Helligkeit also innerhalb des Flächenelements in Abhängigkeit von der Lage der lokalen Flächennormalen. Hierdurch kann die Tiefenstruktur der Oberfläche unter Berücksichtigung der lokal wechselnden Beleuchtungs- und Betrachtungsrichtung und des daraus folgenden unterschiedlichen Reflexionsverhaltens der Oberfläche simuliert werden.

Dieses Verfahren gibt zwar einen relativ natürlichen Eindruck der Oberfläche für alle Positionen des Objekts wieder. Nachteilig ist hingegen, daß zur Ermittlung der lokalen Helligkeit innerhalb eines Flächenelements partielle Ableitungen der Tiefenfunktionen gebildet werden müssen, was einen großen Rechenaufwand erfordert. Dadurch wird die für die Berechnung eines Bildes erforderliche Zeitspanne verlängert, was eine Echt-Zeit-Wiedergabe von Bewegungsdarstellungen insbesondere bei variierenden Lichtverhältnissen erschwert.

Aus 9th EUROGRAPHICS WORKSHOP ON GRAPHICS HARDWARE, Oslo, 12. September 1994, Seiten 48-57, XP002023249; JACKEL and RÜSSELER: "A Real Time Rendering System with Normal Vector Shading" ist ein System zur Echtzeit-Darstellung einer Polygonfläche bekannt, wobei auf der Grundlage einer Interpolation des Normalvektors mittels einer sogenannten "reflectance map", die die Beleuchtungsgeometrie modelliert, eine Schattierung ausgeführt wird. Die Berücksichtigung einer Textur ist dabei nicht vorgesehen.

Aus STATE OF THE ART COMPUTER GRAPHICS: VISUALIZATION AND MODELLING, 1991, Seiten 101-111, XP000614575; HECKBERT and MORETON: "Interpolation for Polygon Texture Mapping and Shading" ist es bekannt, daß eine lineare Interpolation von Schattierungsparametern in der Darstellungsebene besonders für Texturkoordinaten unnatürlich wirkt. Dort wird eine rationale lineare Interpolation vorgeschlagen, die jedoch mehrere Divisionen zur Darstellung jedes Pixels benötigt und daher mit einem hohen Rechenaufwand verbunden ist.

Der Erfindung liegt deshalb insbesondere die Aufgabe zugrunde, ein Bildverarbeitungsverfahren zur Simulation einer Tiefenstruktur bei der Darstellung von computermodellierten Oberflächen eines Objekts bzw. eine Vorrichtung zur Durchführung eines derartigen Bildverarbeitungsverfahrens zu schaffen, welches auch schnelle Bewegtdarstellungen in Realzeit-Wiedergabe ermöglicht.

Die Aufgabe wird durch die im Anspruch 1 genannten Merkmale bzw. - hinsichtlich der Bildverarbeitungsvorrichtung - durch die Merkmale des Anspruchs 11 gelöst.

Die Erfindung schließt die technische Lehre ein, jede durch die Knotenpunkte des als Gittermodell dargestellten Objekts definierte Polygonfläche eines darzustellenden Objekts - als Bezugsfläche - in eine Vielzahl von Rasterelementen aufzuteilen, für jedes Rasterelement aus einem ursprünglichen, die Tiefenstruktur der Oberfläche definierenden Tiefenwert und entweder der Flächennormale der Polygonfläche oder der lokalen Flächennormale eine geneigte lokale Flächennormale - im folgenden als Pixelnormale bezeichnet - zu ermitteln und die Helligkeit des Rasterelements durch ein lokales Beleuchtungsmodell in Abhängigkeit von der Lage der Pixelnormale relativ zur Beleuchtungsrichtung und zur Betrachtungsrichtung zu berechnen.

Damit braucht nicht mehr die präzise räumliche Position eines jeden Oberflächenelements bei allen nachfolgend durchzuführenden räumlichen Bewegungen des Objekts neu ermittelt zu werden. Hierfür ist die Behandlung des vereinfachten "Drahtmodells" ausreichend. Die räumliche Struktur der Oberfläche wird - basierend auf den Bezugsflächen - unter Vernachlässigung der tatsächlichen räumlichen Position der Rasterelemente in Relation zu der Bezugsfläche aktualisiert. Diese wird weiter quasi als zweidimensionale Struktur behandelt, wobei aber diese Struktur nicht - wie bei einer im Raum gedrehten photografischen Abbildung - unveränderlich bleibt, sondern es werden gezielt diejenigen Informationen verändert, welche sich beim Wechsel der Betrachtungsrichtung verändern. Hierzu dient die jedem Raster- (bzw. Pixel) Element zugeordnete Flächennormale, welche den Versatz der Ausrichtung der Oberfläche des Rasterelements in Bezug auf die Ausrichtung der Bezugsfläche repräsentiert. Mittels dieser Größe ist es mit geringem Aufwand möglich, den optischen Eindruck der räumlich jeweils unterschiedlich ausgerichteten Polygonfläche "nachzuführen".

Die Erfindung geht dabei von der Erkenntnis aus, daß der optische Eindruck der Tiefenstruktur einer Oberfläche nicht so sehr von der tatsächlichen (Fein-)position des Rasterelements im Raum, sondern von der Wechselwirkung mit Lichtquellen in Form einer Licht- und Schattenbildung - oder auch der Reflexion mit anderen Objekten - bestimmt wird. Diese Auswirkungen hängen im wesentlichen ab, von der räumlichen Lage der lokalen Flächennormale des Rasterelements relativ zur Betrachtungsrichtung. Damit ist eine schnelle Aktualisierung in Abhängigkeit von der Perspektive des Betrachters der jeweiligen Beleuchtungsrichtung in unkomplizierter Weise möglich. Die lokalen Vertiefungen bzw. Erhöhungen der Oberflächenkontur hat dagegen nur geringe Auswirkungen auf den optischen Eindruck der Tiefenstruktur und kann deshalb insweit vernachlässigt werden.

Die Erfindung schließt dabei allen Möglichkeiten ein, bei denen ein darzustellenden Objekt für die Darstellung durch ein solches mit einer vereinfachten Oberflächenstruktur ersetzt wird, wobei die Oberflächenfeinstruktur ersetzt wird durch eine lokale Information, welche die Ausrichtung der Oberfläche im Rahmen der Feinstruktur umfaßt und die ursprüngliche Feinstruktur ersetzt wird, durch eine flächige Abbildung, die unter Berücksichtigung der Auswirkungen der Beleuchtungs- und Betrachtungsrichtung verändert wird. Hierbei kann insbesondere auch die Auswirkung einer Beleuchtung eines Objekts von innen heraus (selbstleuchtendes Objekt) oder die Auswirkung von von anderen Objekten ausgehenden Wirkungen (Reflexionen) berücksichtigt werden.

Das erfindungsgemäße Verfahren ermöglicht die Simulation einer Tiefenstruktur bei der Darstellung eines aus Polygonflächen gebildeten Körpers. Die räumliche Lage der Polygonfläche ist dabei in der Regel durch die Raumkoordinaten der Knotenpunkte eines Gittermodells definiert, das den darzustellen Körper bzw. die darzustellende Oberfläche im Computer nachbildet.

Die Bezugsfläche braucht dabei nicht in jedem Fall eben sein, sie kann auch - wie weiter unten gezeigt werden wird - eine oder mehrere Verformungen (beispielsweise Ausbeulungen) aufweisen, welche sich der tatsächlichen Oberflächenform des darzustellenden Objekts annähern. Wichtig ist dabei, daß die Oberflächenform der Bezugsflächen eine Differenz zu der darzustellenden Feinstruktur des Objekts aufweist, welche durch die erfindungsgemäßen Maßnahmen überbrückt wird.

Wenn die Erfindung nachfolgend anhand von Polygonflächen beschrieben wird, so können damit auch sämtliche ein Flächensegment repräsentierende Elemente eines Objekts gemeint sein, welche eine Oberfläche aufweisen, die gegenüber der Feinstruktur der darzustellenden Oberfläche eine reduzierte Strukturinformation aufweist. So können beispielsweise die Flächensegmente nach Art der Segmente eines Balls konvex verformt sein, um die Stöße, d. h. die Richtungsänderungen, im Bereich der Oberfläche an den Grenzen der Segmente möglichst gering zu halten. Hierbei liegen alle solche Maßnahmen im Bereich der Erfindung, bei denen einer räumlichen Grundstruktur eines Objekts bei der Darstellung eine Oberflächenfeinstruktur überlagert wird, welche eine die lokale Ausrichtung der Oberfläche kennzeichnende Information enthält, die zur Erzeugung der optischen Auswirkungen der Ausrichtung von Beleuchtung und Betrachtung auf dem betreffenden Oberflächenelement oder in dessen Umgebung herangezogen wird.

Besonders vorteilhaft bei der Erfindung ist der Umstand, daß die mittels der erfindungsgemäßen Maßnahmen auszuführenden die Struktur betreffenden Operationen in sich wiederholende Bereiche (Module) aufgeteilt werden können, so daß - wegen der sich wiederholenden Teile einer Struktur - eine zusätzliche Reduktion des Rechenaufwands möglich ist.

Die erfinderischen Maßnahmen lassen sich sowohl mit rein softwaremäßigen Maßnahmen als auch mittels geeigneter spezieller Hardware ausführen. Die hardwaremäßige Lösung hat dabei den Vorteil, daß sich insbesondere durch in parallel angeordneten Baugruppen gleichzeitig ausgeführte Operationen große Zeitvorteile erzielen lassen.

Wenn daher nachfolgend von "Baugruppen" die Rede ist, kann es sich dabei auch um Funktionsgruppen, beispielsweise in Form von elektrischen Schaltungen, handeln. Hierbei ist auch eingeschlossen, daß ein und dieselbe Bau- oder Funktionsgruppe nacheinander unterschiedliche Operationen ausführt, wie es bei der Prozessortechnik allgemein der Fall ist. Geschwindigkeitsvorteile lassen sich aber - wie erläutert - vor allen Dingen dann erzielen, wenn Funktionsgruppen parallel nebeneinander tätig sind.

Im Rahmen der erfindungsgemäßen Maßnahmen zur Darstellung von Objekten im Rahmen der Bildverarbeitung werden die einzelnen Polygonflächen vorzugsweise in mehrere parallele äquidistante Rasterzeilen aufgeteilt, in denen dann wiederum äquidistant die Rasterelemente angeordnet werden.

Die Aufteilung der Polygonfläche erfolgt durch die erste Bau- oder Funktionsgruppe einer Recheneinheit, die an ihrem Eingang einen die räumliche Lage der Polygonfläche repräsentierenden Parametersatz aufnimmt und an ihrem Ausgang eine Vielzahl von Koordinatensätzen ausgibt, die die räumliche Lage jeweils eines Rasterelements repräsentieren.

Anschließend wird für jedes Rasterelement in Abhängigkeit von der Position des Rasterelements innerhalb der Polygonfläche ein die Tiefenstruktur definierender Tiefenwert bestimmt.

Wichtig ist in diesem Zusammenhang, daß der Tiefenwert ausschließlich von der Position des Rasterelements innerhalb der Polygonfläche abhängt, nicht jedoch von der globalen Position des Rasterelements oder der räumlichen Lage der Polygonfläche. Dies ist notwendig, da andernfalls die auf der Polygonoberfläche erscheinende Tiefenstruktur bei einer Bewegung des Polygons auf der Oberfläche "wandern" würde.

Es ist deshalb eine Speichermatrix - im folgenden auch als Tiefenmatrix bezeichnet - vorgesehen, die für eine vorgegebene Tiefenstruktur die sich aus dem Oberflächenverlauf ergebenden Neigungswerte der lokalen Flächennormale enthält. Jedes Element der Speichermatrix ist also einem Punkt der Tiefenstruktur zugeordnet und enthält den Neigungswert für diesen Punkt der Tiefenstruktur. Als Neigungswert kann beispielsweise der Neigungsvektor abgespeichert sein, also der Vektor, der zu der lokalen Flächennormale der glatten Oberfläche addiert werden muß, um den Eindruck der Tiefenstruktur hervorzurufen. Auch ist es möglich, als Neigungswert eine Rotationsmatrix abzuspeichern, die die Drehung der lokalen Flächennormale definiert. Dies ist besonders vorteilhaft, da durch eine Drehung die Länge der lokalen Flächennormale nicht verändert wird.

Wichtig ist in diesem Zusammenhang, daß in der Tiefenmatrix nicht die Tiefenstruktur selbst als Relief abgespeichert ist, sondern die sich aus dem Oberflächenverlauf ergebende Neigung der lokalen Flächennormale. Die Berechnung der aufgrund der Tiefenstruktur geneigten lokalen Flächennormale kann deshalb vorteilhaft relativ schnell und mit geringem Rechenaufwand erfolgen.

Für jedes Rasterelement wird also aus der Speichermatrix ein Neigungswert ausgelesen, der die durch die Tiefenstruktur verursachte Neigung der lokalen Flächennormale dieses Rasterelements repräsentiert. Die Speichermatrix wird deshalb durch den Koordinatensatz des jeweiligen Rasterelements adressiert.

In einer bevorzugten Ausführungsform der Erfindung wird deshalb für jede Position eines Polygons eine Transformationsmatrix **M** berechnet, die die Raumkoordinaten $(x_i, y_i, z_i)$ der Rasterelemente in ein von der Lage des Polygons unabhängiges 2-dimensionales Koordinatensystem (U,V) transformiert:

$$\begin{bmatrix} u \\ v \end{bmatrix} = \begin{bmatrix} x & y & z \end{bmatrix} \cdot \begin{bmatrix} M_{00} & M_{01} \\ M_{10} & M_{11} \\ M_{20} & M_{21} \end{bmatrix}$$

Das U,V-Wertepaar dient zur Adressierung der Tiefenmatrix, aus der dann der Tiefenwert des Rasterelements ausgelesen wird. In diesem Zusammenhang ist wichtig, daß die Transformationsmatrix **M** für jedes Polygon bzw. für jede Lage eines Polygons individuell berechnet werden muß, damit jedem Rasterelement unabhängig von der räumlichen Lage des Polygons immer dasselbe Element der Tiefenmatrix und damit auch derselbe Tiefenwert zugeordnet wird.

Die Berechnung der Transformationsmatrix **M** erfolgt beispielsweise aus den Raumkoordinaten der Eckpunkte der Polygonfläche. Ist die Polygonfläche beispielsweise ein Dreieck, so sind die Raumkoordinaten $(x_i, y_i, z_i)$ der drei Eckpunkte $P_1$, $P_2$, $P_3$ des Dreiecks bekannt. Die Abbildung vom 3-dimensionalen Koordinatensystem in das U,V-Koordinatensystem muß - wie bereits erläutert - unabhängig von der Lage der Polygonfläche sein, damit die auf der Polygonfläche simulierte Tiefenstruktur bei einer Bewegung der Polygonfläche nicht innerhalb der Polygonfläche wandert. Dies läßt sich beispielsweise dadurch erreichen, daß die Eckpunkte $P_i$ einer Polygonfläche unabhängig von der Lage der Polygonfläche jeweils auf bestimmte Punkte $P'_i$ im U,V-Koordinatensystem abgebildet werden. Die Punkte $P'_i$ werden dabei zunächst willkürlich vorgegeben. Betrachtet man ein Dreieck als Polygonfläche, so gilt für die Abbildung der drei Eckpunkte $P_i(x_i\ y_i\ z_i)$ des Dreiecks vom 3-dimensionalen X,Y,Z-Koordinatensystem ins U,V-Koordinatensystem:

$$\begin{bmatrix} u_1 \\ v_1 \end{bmatrix} = \begin{bmatrix} x_1 & y_1 & z_1 \end{bmatrix} \cdot \begin{bmatrix} M_{00} & M_{01} \\ M_{10} & M_{11} \\ M_{20} & M_{21} \end{bmatrix}$$

$$\begin{bmatrix} u_2 \\ v_2 \end{bmatrix} = \begin{bmatrix} x_2 & y_2 & z_2 \end{bmatrix} \cdot \begin{bmatrix} M_{00} & M_{01} \\ M_{10} & M_{11} \\ M_{20} & M_{21} \end{bmatrix}$$

$$\begin{bmatrix} u_3 \\ v_3 \end{bmatrix} = \begin{bmatrix} x_3 & y_3 & z_3 \end{bmatrix} \cdot \begin{bmatrix} M_{00} & M_{01} \\ M_{10} & M_{11} \\ M_{20} & M_{21} \end{bmatrix}$$

Da die Punkte $P'_i$ ($u_i$, $v_i$) willkürlich vorgegeben werden, ist also ein Gleichungssystem mit sechs linear unabhängigen Gleichungen bekannt. Daraus können in einfacher Weise - beispielsweise durch Anwendung der Cramer'schen Regel - die sechs Elemente $M_{ij}$ der Transformationsmatrix berechnet werden. Die Transformationsmatrix **M** wird also in der Regel einmal für jede Polygonfläche berechnet.

Bei der perspektivischen Betrachtung der Polygonfläche treten in der Regel Verzerrungen auf, wenn der Betrachter unter einem spitzen Winkel auf die Polygonfläche sieht, da die Eckpunkte der Polygonfläche in diesem Fall einen unterschiedlichen Abstand zum Betrachter haben. In einer bevorzugten Ausführungsform des erfindungsgemäßen Verfahrens werden deshalb homogenisierte Koordinaten x, y, z verwendet, um die Position der Eckpunkte der Polygonfläche zu definieren. Hierzu werden die Koordinaten x*, y*, z* der Eckpunkte jeweils mit der sogenannten homogenen Komponente $^1/_w$ multipliziert, die für jeden Eckpunkt proportional zum Abstand dieses Eckpunktes zum Betrachter ist.

Der optische Eindruck der Tiefenstruktur ist - wie bereits vorstehend ausgeführt - im wesentlichen abhängig von der Lage der lokalen Flächennormale relativ zur Betrachtungsrichtung und zur Beleuchtungsrichtung. Der in der Tiefenmatrix gespeicherte Tiefenwert enthält deshalb in dieser Variante der Erfindung zwei Komponenten $\Delta u$, $\Delta v$, die die durch die Tiefenstruktur verursachte lokale Neigung der lokalen Flächennormale definieren. So bestimmt die Komponente $\Delta u$, wieweit die lokale Flächennormale in Richtung der U-Achse geneigt ist, während die Komponente $\Delta v$ die Neigung der lokalen Flächennormale gegenüber der V-Achse bestimmt.

Maßgebend ist jedoch nicht die durch die Tiefenstruktur verursachte Neigung der lokalen Flächennormale im U,V-Koordinatensystem, sondern die entsprechende Neigung der Pixelnormale im Raumkoordinatensystem.

Die bereits zuvor erwähnte Recheneinheit weist deshalb eine zweite Baugruppe auf, die aus dem ersten Parametersatz, der die räumliche Lage der Polygonfläche repräsentiert - und /oder den Koordinatensätzen der einzelnen Rasterelemente einen zweiten Parametersatz berechnet, der die räumliche Lage der Flächennormale der Polygonfläche oder der lokale Flächennormale der einzelnen Rasterelemente zunächst ohne Berücksichtigung der Tiefenstruktur repräsentiert.

Weiterhin weist die Recheneinheit eine dritte Baugruppe auf, die aus dem Neigungswert - in dieser Variante also den Komponenten $\Delta u$, $\Delta v$ - und der Flächennormale der Polygonfläche oder der lokalen Flächennormale der glatten Oberfläche die geneigte lokale Flächennormale berechnet. Die dritte Baugruppe erhält hierzu an ihrem Eingang die Koordinatensätze der Rasterelemente sowie die zugehörigen Neigungswerte aus der Tiefenmatrix und errechnet daraus einen dritten Parametersatz, der die räumliche Lage der Flächennormale der Polygonfläche unter Berücksichtigung der Tiefenstruktur berechnet.

In einer bevorzugten Variante der Erfindung wird deshalb für jedes Polygon eine weitere Transformationsmatrix **A** berechnet, die aus den Komponenten $\Delta u$, $\Delta v$ die Berechnung der Neigung der Pixelnormale im Raumkoordinatensystem ermöglicht.

Für die Pixelnormale $(n'_x, n'_y, n'_z)^T$ folgt dann aus der Flächennormale $(n_x, n_y, n_z)^T$ der glatten Oberfläche und den Tiefenstrukturwerten $\Delta u$, $\Delta v$ :

$$\begin{bmatrix} n'_x \\ n'_y \\ n'_z \end{bmatrix} = \begin{bmatrix} n_x \\ n_y \\ n_z \end{bmatrix} + \begin{bmatrix} A_{00} & A_{01} \\ A_{10} & A_{11} \\ A_{20} & A_{21} \end{bmatrix} \cdot \begin{bmatrix} \Delta u \\ \Delta v \end{bmatrix}$$

Zur Berechnung der Transformationsmatrix **A** sind gemäß der Erfindung verschiedene Möglichkeiten vorgesehen, von denen im folgenden einige kurz beschrieben werden.

In einer Variante der Erfindung wird die Transformationsmatrix **A** aus der Transformationsmatrix **M**, einer für die Polygonfläche vorgegebenen Geometrietransformationsmatrix **G** sowie einer weiteren Matrix **T** berechnet.

Zunächst wird aus der Flächennormale der Polygonfläche $n=(n_x\ n_y\ n_z)^T$ der normalisierte Normalenvektor $n_N=(n_{xN}\ n_{yN}\ n_{zN})^T$ berechnet:

$$n_N = \frac{n}{|n|}$$

Für die Transformationsmatrix **T** folgt dann:

$$T = [\, e_y \times n \quad n \times (e_y \times n) \quad n_N \,]^T$$

also in Komponentenschreibweise:

$$T = \begin{bmatrix} n_z & -n_y n_x & n_{xN} \\ 0 & n_z{}^2 & n_{yN} \\ -n_x & -n_y n_z & n_{zN} \end{bmatrix}^T$$

In gleicher Weise wird aus der lokalen Flächennormale $n_L$ die Transformationsmatrix $T_L$ berechnet.

Mit der Geometrietransformationsmatrix **G** folgt dann:

$$G' = G \cdot T^{-1}$$

Daraus kann dann direkt die Transformationsmatrix **A** berechnet werden:

$$A = G' \cdot T_L \cdot M$$

also in Komponentenschreibweise:

$$\begin{bmatrix} A_{00} & A_{01} \\ A_{10} & A_{11} \\ A_{20} & A_{21} \end{bmatrix} = \begin{bmatrix} G_{00} & G_{01} & G_{02} \\ G_{10} & G_{11} & G_{12} \\ G_{20} & G_{21} & G_{22} \end{bmatrix} \cdot \begin{bmatrix} T_{00} & T_{01} & T_{02} \\ T_{10} & T_{11} & T_{12} \\ T_{20} & T_{21} & T_{22} \end{bmatrix} \cdot \begin{bmatrix} M_{00} & M_{01} \\ M_{10} & M_{11} \\ M_{20} & M_{21} \end{bmatrix}$$

Bei der vorstehend beschriebenen Berechnung der Transformationsmatrix **T** bzw. **T**$_L$ müssen jeweils relativ komplizierte und rechenintensive Vektoroperationen durchgeführt werden.

In einer anderen Variante der Erfindung wird deshalb eine Vielzahl von Transformationsmatrizen **T** bzw. **T**$_L$ für verschiedene räumliche Lagen der Flächennormale vorberechnet und jeweils in einem Element einer 3-dimensionalen Speichermatrix **S** abgespeichert. Jedes Element der Speichermatrix **S** enthält also eine komplette Transformationsmatrix **T** bzw. **T**$_L$.

Die Speichermatrix **S** bildet eine kubische Hüllfläche nach, in deren Mittelpunkt der Ursprung der Flächennormale liegt. Jedem Punkt auf der Hüllfläche ist eine Transformationsmatrix **T** bzw. **T**$_L$ zugeordnet. Zur Bestimmung der Transformationsmatrix **T** bzw. **T**$_L$ muß deshalb der Schnittpunkt der Flächennormale oder deren Verlängerung mit der kubischen Hüllfläche bestimmt werden.

Die Adressierung der ersten Dimension der Speichermatrix **S** erfolgt in Abhängigkeit von der von der Flächennormale geschnittenen Seitenfläche der kubischen Hüllfläche. Für den Adreßwert $a_1$ der ersten Dimension der Speichermatrix **S** gilt also:

$$a_1 = \begin{cases} 1 & \textit{falls} \quad \max\left[n_x, n_y, n_z\right] = n_x > 0 \\ 2 & \textit{falls} \quad \max\left[n_x, n_y, n_z\right] = n_x < 0 \\ 3 & \textit{falls} \quad \max\left[n_x, n_y, n_z\right] = n_y > 0 \\ 4 & \textit{falls} \quad \max\left[n_x, n_y, n_z\right] = n_y < 0 \\ 5 & \textit{falls} \quad \max\left[n_x, n_y, n_z\right] = n_z > 0 \\ 6 & \textit{falls} \quad \max\left[n_x, n_y, n_z\right] = n_z < 0 \end{cases}$$

Die Adressierung der anderen beiden Dimensionen der Speichermatrix **S** erfolgt in Abhängigkeit von der Lage des Schnittpunkts innerhalb der von der Flächennormale durchstoßenen Seitenfläche. Für die Adreßwerte $a_2$, $a_3$ gilt:

$$a_2 = \begin{cases} \arctan\left(\dfrac{n_y}{|n_x|}\right) & \textit{falls} \quad a_1 = 1 \, oder \, 2 \\ \arctan\left(\dfrac{n_x}{|n_y|}\right) & \textit{falls} \quad a_1 = 3 \, oder \, 4 \\ \arctan\left(\dfrac{n_x}{|n_z|}\right) & \textit{falls} \quad a_1 = 5 \, oder \, 6 \end{cases} \qquad a_3 = \begin{cases} \arctan\left(\dfrac{n_z}{|n_x|}\right) & \textit{falls} \quad a_1 = 1 \, oder \, 2 \\ \arctan\left(\dfrac{n_z}{|n_y|}\right) & \textit{falls} \quad a_1 = 3 \, oder \, 4 \\ \arctan\left(\dfrac{n_y}{|n_z|}\right) & \textit{falls} \quad a_1 = 5 \, oder \, 6 \end{cases}$$

Aus der Speichermatrix **S** wird dann die Transformationsmatrix ausgelesen:

$$T = S(a_1, a_2, a_3)$$

bzw.

$$T_L = S(a_1, a_2, a_3)$$

Die Berechnung der Transformationsmatrix **A** erfolgt dann in gleicher Weise wie bei der zuvor beschriebenen Variante der Erfindung:

$$A = G' \cdot T_L \cdot M.$$

Diese Variante ermöglicht vorteilhaft eine relativ schnelle Berechnung der Transformationsmatrix **A**. Die Berechnung der Elemente der Speichermatrix **S** erfolgt dabei vorzugsweise in der gleichen Weise wie die Berechnung der Transformationsmatrizen **T** in der zuvor beschriebenen Variante.

In der vorstehend beschriebenen Variante des erfindungsgemäßen Verfahrens erfolgt die Berechnung der durch die Tiefenstruktur geneigten Pixelnormale durch Multiplikation des Neigungsvektors im U,V-Koordinatensystem mit der Transformationsmatrix **A**.

In einer anderen Variante der Erfindung wird die geneigte Pixelnormale mit Hilfe von sogenannten Quaternionen berechnet. Quaternionen sind Vektoroperatoren mit einer skalaren Komponente und drei vektoriellen Komponenten. Aus dem Neigungsvektor

$$d = [\Delta u, \Delta v, 0]^T$$

im U,V-Koordinatensystem und der Quaternion

$$q_i = \left( s^i, \left( c_x^i, c_y^i, c_z^i \right) \right)$$

folgt dann für die geneigte Pixelnormale $(n'_x, n'_y, n'_z)^T$ im X, Y, Z-Koordinatensystem aus der Pixelnormale $(n_x, n_y, n_z)^T$ der glatten Polygonfläche:

$$\begin{bmatrix} n'_x \\ n'_y \\ n'_z \end{bmatrix} = \begin{bmatrix} n_x \\ n_y \\ n_z \end{bmatrix} + q_i^{-1} \cdot d \cdot q_i$$

Die Berechnung der Quaternionen erfolgt beispielsweise durch Interpolation der in den Eckpunkten der Polygonfläche vorgegebenen Quaternionen für jedes Rasterelement. Die Interpolation kann hierbei vorteilhaft komponentenweise erfolgen und erfordert deshalb nur einen geringen Aufwand. In diesem Fall ist also für jeden Eckpunkt der Polygonfläche eine Quaternion vorgegeben, aus der dann die Quaternionen der einzelnen Rasterelemente berechnet werden.

Die Tiefenstruktur verursacht eine Neigung der Pixelnormale gegenüber der Flächennormale der glatten Oberfläche. Die durch die Tiefenstruktur verursachte Neigung der Pixelnormale kann dabei entweder an der Flächennormale des gesamten Polygons oder an der Pixelnormale ausgerichtet werden.

Bei einer Ausrichtung der durch die Tiefenstruktur verursachten Neigung der Pixelnormale an der Flächennormale der Polygonfläche kann eine Tiefenstruktur nur auf ebenen Polygonflächen korrekt simuliert werden, da nur bei solchen Polygonflächen die Flächennormale innerhalb der Polygonfläche einheitlich ist. Die Berechnung der Flächennormale der Polygonfläche kann aus den Raumkoordinaten der Eckpunkte der Polygonfläche bestimmt werden. Hierzu werden beispielsweise die Kantenvektoren der Polygonfläche berechnet, indem die Raumkoordinaten benachbarter Eckpunkte komponentenweise subtrahiert werden. Die auf diese Weise ermittelten Kantenvektoren liegen naturgemäß in der durch die Polygonfläche definierten Ebene. Die Flächennormale ergibt sich dann als Vektorprodukt zweier Kantenvektoren.

Bei gekrümmten Polygonflächen variiert die Flächennormale hingegen innerhalb der Polygonfläche. Die durch die Tiefenstruktur verursachte Neigung der Pixelnormale muß deshalb an der lokalen Flächennormale der glatten, aber gekrümmten Polygonfläche ausgerichtet werden. Es muß also zunächst für alle Rasterelemente die lokale Flächennormale der glatten Polygonfläche - also ohne Tiefenstruktur - berechnet werden. Dies geschieht vorzugsweise durch Interpolation der Eckpunktnormalen. Hierzu werden bei gekrümmten Polygonflächen die lokalen Flächennormalen in den Eckpunkten der Polygonfläche vorgegeben. Die lokale Flächennormale an einem beliebigen Punkt der Polygonfläche ergibt sich dann durch Interpolation der Eckpunktnormalen.

Die Vorgabe der Eckpunktnormalen stellt darüber hinaus einen "weichen" Übergang zwischen benachbarten Polygonflächen sicher, da eine Eckpunktnormale jeweils zu mehreren benachbarten Polygonflächen gehört und die Oberfläche an der Verbindungslinie zweier benachbarter Polygonflächen somit glatt ist.

Bei der Interpolation der lokalen Flächennormale der gekrümmten Polygonfläche aus den Eckpunktnormalen muß in Abhängigkeit zum einen von der Position des zu betrachtenden Rasterelements zwischen den Eckpunkten der Polygonflächen und zum anderen von den Eckpunktnormalen ein Normalenvektor ermittelt werden, der eine Zwischenposition darstellt. Betrachtet man eine Interpolation zwischen nur zwei Eckpunktnormalen, also auf einer Verbindungslinie der beiden Eckpunkte, so läßt sich die eine Eckpunktnormale durch eine Verschiebung und eine Rotation auf die andere Eckpunktnormale abbilden. Bei der Interpolation der lokalen Flächennormale besteht das Problem, daß bei einer aus einer Rotation und einer Verschiebung bestehenden Abbildung nicht einfach komponentenweise interpoliert werden kann.

In einer vorteilhaften Variante der Erfindung erfolgt die Interpolation der lokalen Flächennormale deshalb mit Hilfe der sogenannten Quaternionen. Quaternionen sind vierdimensionale Vektoroperatoren, die eine skalare Komponente und drei vektorielle Komponenten aufweisen. Für jede Eckpunktnormale ist eine Quaternion vorgegeben. Die Interpolation einer beliebigen lokalen Flächennormale kann vorteilhafterweise durch komponentenweise Interpolation der Quaternionen erfolgen. Soll beispielsweise die lokale Flächennormale in der Mitte zwischen zwei Eckpunkten berechnet werden und erfolgt die Interpolation lediglich anhand dieser beiden Eckpunkte, so ist zunächst die Quaternion dieser lokalen Flächennormale zu ermitteln, die sich in diesem Fall als Mittelwert der für die beiden Eckpunktnormalen vorgegebenen Quaternionen ergibt. Die lokale Flächennormale ergibt sich dann aus der Verknüpfung der einen Eckpunktnormale mit der berechneten Quaternion.

Es ist also für jedes Rasterelement der Polygonfläche die räumliche Lage der lokalen Flächennormale (Pixelnormale) sowie die Position des Rasterelements bekannt. Das erfindungsgemäße Verfahren sieht deshalb - ausgehend von einem lokalen Beleuchtungsmodell - die Berechnung eines Helligkeits- oder Farbwerts für jedes Rasterelement vor. Die Helligkeit, mit der ein Rasterelement einem Betrachter erscheint, hängt - wie bereits vorstehend ausgeführt - im wesentlichen ab von der Lage der Pixelnormale relativ zur Beleuchtungsrichtung und zur Betrachtungsrichtung, also der Perspektive des Betrachters.

Zur Berechnung des Helligkeits- bzw. Farbwerts weist die bereits zuvor erwähnte Recheneinheit eine vierte Baugruppe auf. Am Eingang erhält die vierte Baugruppe den dritten Parametersatz, der die räumliche Lage der lokalen geneigten Flächennormale repräsentiert. Die Helligkeit eines Rasterelements wird also von der Ausrichtung der lokalen Flächennormale der Polygonfläche mit Berücksichtigung der Tiefenstruktur bestimmt.

Weiterhin erhält die vierte Baugruppe vorzugsweise einen vorgegebenen vierten Parametersatz, der die räumliche Lage des Betrachters repräsentiert, sowie gegebenenfalls einen fünften Parametersatz, der die Beleuchtungsverhältnisse repräsentiert.

In einer Variante der Erfindung von eigener schutzwürdiger Bedeutung wird zur Berechnung der Helligkeit des Rasterelements diffuse Reflexion an dem Rasterelement angenommen. Das auf das Rasterelement auftreffende Licht wird dabei gleichmäßig in alle Richtungen abgestrahlt. Die von einem Betrachter wahrnehmbare Helligkeit eines Rasterelements hängt deshalb im wesentlichen von der Ausrichtung der Pixelnormale gegenüber der Beleuchtungsumgebung ab. Bevorzugt wird hierbei parallel zur Pixelnormale einfallendes Licht reflektiert. Weicht die Lichteinfallsrichtung von der Pixelnormale ab, so wird das Licht entsprechend schwächer reflektiert. Jedem Rasterelement läßt sich also eine Reflexionscharakteristik zuordnen, die die Abhängigkeit der Pixelhelligkeit von der Lichteinfallsrichtung und dem Lichteinfallswinkel wiedergibt.

Zur Definition der Reflexionscharakteristik werden in dieser Variante der Erfindung die Winkelabweichungen zwischen der Pixelnormale und der Beleuchtungssrichtung in zwei verschiedenen, vorzugsweise zueinander rechtwinkligen Ebenen berechnet. Aus diesen beiden Winkelabweichungen wird dann der Reflexionsfaktor des Rasterelements berechnet. In einer bevorzugten Ausführungsform dieser Variante dienen die beiden Winkelabweichungen zur Adressierung einer 2-dimensionalen Matrix - im folgenden als Reflexionsmatrix bezeichnet -, die die winkel- und richtungsabhängigen Reflexionsfaktoren enthält. Auf diese Weise ist die Definition einer beliebigen Reflexionscharakteristik des Rasterelements möglich.

In einer anderen Variante der Erfindung wird die Helligkeit des Rasterelements in Abhängigkeit der Lage der Pixelnormale relativ zur Betrachtungsrichtung berechnet. Hierbei wird von der Erkenntnis ausgegangen, daß das Rasterelement dann am hellsten erscheint, wenn Pixelnormale und Betrachtungsrichtung parallel verlaufen, da dann die sichtbare Oberfläche des Rasterelements maximal ist. Ist die Pixelnormale gegenüber der Betrachtungsrichtung geneigt, so erscheint das Rasterelement entsprechend dunkler. Es läßt sich also eine Reflexionscharakteristik definieren, die die Helligkeit eines Rasterelements in Abhängigkeit von der Lage der Pixelnormale relativ zur Betrachtungsrichtung wiedergibt.

Zur Definition der Reflexionscharakteristik werden die Winkelabweichungen zwischen der Pixelnormale und der Betrachtungsrichtung in zwei verschiedenen, vorzugsweise zueinander rechtwinkligen Ebenen berechnet. Aus diesen beiden Winkelabweichungen wird dann der Reflexionsfaktor des Rasterelements berechnet.

In einer bevorzugten Ausführungsform dieser Variante dienen die beiden Winkelabweichungen zur Adressierung einer 2-dimensionalen Matrix, in der der Reflexionsfaktor für verschiedene Werte der Winkelabweichungen abgelegt ist.

In einer anderen Variante der Erfindung von eigener schutzwürdiger Bedeutung wird bei der Berechnung der Helligkeit des Rasterelements Spiegelreflexion an dem Rasterelement angenommen. Das auf das Rasterelement auf-

EP 0 846 309 B1

treffende Licht wird dabei nach den Gesetzen der geometrischen Strahlenoptik an dem Rasterelement reflektiert, wobei Einfallswinkel und Ausfallswinkel gleich sind. Betrachtet man nun nicht einen von einer Lichtquelle ausgehenden Lichtstrahl, sondern umgekehrt einen vom Betrachter ausgehenden "Sehstrahl", so wird dieser "Sehstrahl" an dem Rasterelement in Richtung eines Reflexionsvektors reflektiert. Die räumliche Lage dieses Reflexionsvektors ergibt sich ebenfalls aus den Gesetzen der geometrischen Strahlenoptik aus der Gleichheit von Einfallswinkel und Ausfallswinkel.

Verläuft der Reflexionsvektor parallel zur Lichteinfallsrichtung, so sieht der Betrachter die Lichtquelle optimal und das Rasterelement erscheint am hellsten. Weicht der Reflexionsvektor dagegen von der Lichteinfallsrichtung ab, so ist die Reflexionsbedingung nicht exakt erfüllt und das Rasterelement erscheint entsprechend dunkler.

Es läßt sich also eine Reflexionscharakteristik definieren, die die Winkel- und Richtungsabhängigkeit der Reflexion wiedergibt. Im Gegensatz zur diffusen Reflexion ist der Reflexionsfaktor hierbei auch abhängig von der Betrachtungsrichtung und nicht lediglich von der Lage der Pixelnormale relativ zur Beleuchtungsrichtung.

Zur Berechnung der Reflexionscharakteristik werden die Winkelabweichungen zwischen dem Reflexionsvektor und der Beleuchtungsrichtung in zwei verschiedenen, vorzugsweise zueinander rechtwinkligen Ebenen berechnet. Aus diesen Winkeln wird dann der Reflexionsfaktor für die Spiegelreflexion berechnet. In einer bevorzugten Ausführungsform dieser Variante dienen die beiden Winkel zur Adressierung einer Reflexionsmatrix, die die Reflexionscharakteristik des Rasterelements definiert.

Die beiden vorgenannten Varianten können auch kombiniert werden, indem aus dem Reflexionsfaktor für diffuse Reflexion und dem Reflexionsfaktor für Spiegelreflexion ein einheitlicher Reflexionsfaktor berechnet wird. Die beiden Reflexionsfaktoren können dabei unterschiedlich gewichtet werden. Auf diese Weise ist die Nachbildung eines natürlichen Reflexionsverhaltens möglich.

In einer anderen Variante der Erfindung von eigener schutzwürdiger Bedeutung wird zur Berechnung der Helligkeit des Rasterelements eine kubische Hüllfläche um das Rasterelement gelegt, wobei jedem Flächenelement der Hüllfläche ein Wert der Helligkeit des Rasterelements zugeordnet ist. Die Hüllfläche enthält also eine Rundumaufnahme der Umgebung aus der Perspektive des Rasterelements.

Wie bei den zuvor beschriebenen Varianten der Helligkeitsberechnung kann auch hier wahlweise diffuse Reflexion oder Spiegelreflexion angenommen werden.

Bei der Annahme diffuser Reflexion wird nach dem erfindungsgemäßen Verfahren der Schnittpunkt der Pixelnormale oder deren Verlängerung mit der Hüllfläche bestimmt. Der diesem Schnittpunkt zugeordnete Wert der Hüllfläche bildet dann den Helligkeitswert des Rasterelements.

Bei der Annahme einer Spiegelreflexion an dem Rasterelement wird hingegen der Schnittpunkt des Reflexionsvektors mit der Hüllfläche bestimmt und der zugehörige Wert der Hüllfläche als Helligkeitswert des Rasterelements verwendet.

In einer bevorzugten Ausführungsform dieser Variante dient eine dreidimensionale Matrix - im folgenden als Reflexionsmatrix bezeichnet - zur Nachbildung der kubischen Hüllfläche und zur Definition der Reflexionsfaktoren für die verschiedenen Beleuchtungs- und Betrachtungsrichtungen. Die kubische Hüllfläche weist sechs Seitenflächen auf, die jeweils mit einer Verteilung von Werten des Reflexionsfaktors belegt sind. Zunächst wird also bestimmt, welche Seitenfläche der Hüllfläche von der Pixelnormale bzw. dem Reflexionsvektor durchstoßen wird, wobei jeder Seitenfläche ein Wert zugeordnet ist, der die erste Dimension der Reflexionsmatrix adressiert. Die beiden anderen Dimensionen der Reflexionsmatrix werden durch die Winkel der Pixelnormale bzw. des Reflexionsvektors zu der die Seitenfläche durchstoßenden Achse des Koordinatensystems adressiert. Mit anderen Worten werden die beiden anderen Dimensionen der Reflexionsmatrix also in Abhängigkeit von der Lage des Schnittpunkts auf der Seitenfläche adressiert.

In einer vorteilhaften Ausführungsform des erfindungsgemäßen Verfahrens ist vorgesehen, jeder Polygonfläche zusätzlich zu der Tiefenstruktur ein zweidimensionales Texturbild zu überlagern. Hierdurch können Farb- oder Helligkeitsmuster natürlicher Oberflächen simuliert werden. Die Überlagerung des Texturbildes kann dabei in gleicher Weise erfolgen wie die Überlagerung der Tiefenstruktur. So wird jedem Rasterelement der Polygonfläche ein Wert für das Texturbild zugewiesen.

Hierbei ist wichtig, daß der Wert für das Texturbild lediglich von der Lage des Rasterelements innerhalb der Polygonfläche abhängt, nicht jedoch von der räumlichen Lage der Polygonfläche. Andernfalls würde das Texturbild bei einer Bewegung der Polygonfläche innerhalb der Polygonfläche "wandern".

Das vorstehend beschriebene Verfahren ermöglicht die Simulation einer Tiefenstruktur bei der Darstellung einer Polygonfläche, indem die lokale Flächennormale innerhalb der Polygonfläche gegenüber der Flächennormale der gesamten Polygonfläche in Abhängigkeit von einer vorgegebenen Tiefenstruktur geneigt wird.

Voraussetzung hierfür ist, daß die Polygonfläche vollständig eben ist und somit eine einheitliche Flächennormale aufweist, die als Bezugsgröße für die Ausrichtung der lokalen Flächennormale zur Simulation der Tiefenstruktur dienen kann.

Bei der Modellierung von stark gekrümmten Oberflächen ist es jedoch oftmals wünschenswert, die Form der Polygonfläche an die Form der darzustellenden Oberfläche anzupassen. Die Flächennormale der Polygonfläche ist also in diesem Fall nicht einheitlich, sondern variiert innerhalb der Polygonfläche. Dies ist allerdings nicht zurückzuführen auf die Neigung der lokalen Flächennormale aufgrund der Tiefenstruktur, sondern hängt lediglich ab von der Form der glatten Oberfläche.

Die Flächennormale wird dabei beispielsweise in den Eckpunkten des Polygons vorgegeben. Die Berechnung der lokalen Flächennormale innerhalb der Polygonfläche erfolgt dann durch Interpolation der Eckpunktnormalen.

Die Neigung der Flächennormale aufgrund der Tiefenstruktur wird hierbei an der durch Interpolation gewonnenen lokalen Flächennormale ausgerichtet und nicht - wie bei der Annahme einer ebenen Polygonfläche - an der Flächennormale der gesamten Polygonfläche.

In den vorstehend beschriebenen Varianten des erfindungsgemäßen Bildverarbeitungsverfahrens ist die auf der Oberfläche des Objekts simulierte Tiefenstruktur zeitlich konstant. Oftmals ist es jedoch wünschenswert, eine zeitlich variierende Tiefenstruktur zu simulieren, um beispielsweise eine Veränderung der Oberflächenstruktur nachbilden zu können. In einer vorteilhaften weiterbildenden Variante der Erfindung wird der aus der Tiefenmatrix ausgelesene Neigungswert deshalb vor der Berechnung der lokalen geneigten Flächennormale mit einem Skalierungsfaktor multipliziert, um die räumliche Tiefenwirkung der zu simulierenden Tiefenstruktur verändern zu können. Ist der Skalierungsfaktor gleich Null, so erscheint die Oberfläche des darzustellenden Objekts völlig glatt. Mit zunehmendem Skalierungsfaktor nimmt dann auch die Tiefenwirkung der auf der Oberfläche erscheinenden simulierten Tiefenstruktur zu. Auf diese Weise läßt sich die Tiefenwirkung der Tiefenstruktur beliebig einstellen. Auch ist es möglich, das Entstehen einer Tiefenstruktur zu simulieren, indem der Skalierungsfaktor während der Darstellung langsam von Null ausgehend erhöht wird.

In einer anderen Variante der Erfindung zur Simulation einer dynamischen Tiefenstruktur sind dagegen mehrere Tiefenmatrizen vorgesehen, die jeweils eine Momentaufnahme der zu simulierenden Tiefenstruktur wiedergeben. Während der Darstellung der räumlichen Szene werden die einzelnen Tiefenmatrizen dann zur Erzeugung eines dynamischen Bildeindrucks jeweils nacheinander ausgewählt und zur Berechnung der geneigten lokalen Flächennormale herangezogen. Da der Inhalt der einzelnen Tiefenmatrizen vorberechnet werden kann, entsteht hierbei während der eigentlichen Darstellung kaum zusätzlicher Rechenaufwand, was insbesondere bei einer Echt-Zeit-Darstellung von Bewegungsabläufen wichtig ist. Es ist lediglich erforderlich, die gewünschte Tiefenmatrix auszuwählen und mit der Baugruppe zu verbinden, die die geneigte lokale Flächennormale aus der Flächennormale der glatten Oberfläche und dem Neigungswert berechnet.

Auf die gleiche Weise läßt sich auch die auf der Objektoberfläche erscheinende Textur dynamisch simulieren. In einer vorteilhaften Variante des erfindungsgemäßen Bildverarbeitungsverfahren sind deshalb mehrere Texturspeicher vorgesehen, die jeweils eine Momentaufnahme des auf der Objektoberfläche zu simulierenden Texturbildes wiedergeben. Zur Erzeugung eines Bewegungseindrucks muß dann während der Wiedergabe lediglich zwischen den einzelnen Texturspeichern umgeschaltet werden. Auch hierbei entsteht während der Darstellung kaum zusätzlicher Rechenaufwand, da der Inhalt der Texturspeicher vorberechnet werden kann.

Da der Texturspeicher in der Regel direkt das Texturbild in digitalisierter Form enthält, ist es vorteilhaft möglich, als Texturspeicher den Bildwiederholspeicher eines Video- oder Computergrafiksystem vorzusehen oder den Texturspeicher in sonstiger Weise mit einem derartigen System zu verbinden. Auf diese Weise ist es mit Hilfe herkömmlicher Video- oder Computer-Grafiksysteme möglich, beliebige animierte Bildsequenzen als Texturbild auf der Objektoberfläche zu simulieren.

Das erfindungsgemäße Bildverarbeitungsverfahren sieht - wie bereits eingehend erläutert - mehrere Speichermatrizen (Texturmatrix, Tiefenstrukturmatrix, Reflexionsmatrix für Spiegelreflexion und diffuse Reflexion, Umgebungsmatrix) vor, die das Abbildungsverhalten des Bildverarbeitungsverfahrens beeinflussen und das Erscheinungsbild der darzustellenden räumlichen Szene bestimmen. Die vorstehend anhand der dynamischen Tiefenstruktur- bzw. Textursimulation beschriebenen Verfahren zur dynamischen Simulation können in gleicher Weise auf sämtliche Speichermatrizen angewendet werden, die das Erscheinungsbild der räumlichen Szene beeinflussen. So lassen sich beispielsweise durch dynamische Änderung der Reflexionsmatrizen interessante Lichteffekte erreichen.

Die verschiedenen Möglichkeiten der dynamischen Simulation lassen sich hierbei jeweils allein oder in jeder beliebigen Kombination nutzen.

Der Körper bzw. die Fläche, die auf dem Bildschirm dargestellt werden soll, wird - wie bereits vorstehend beschrieben - im Computer als Gittermodell nachgebildet. Die Oberfläche besteht deshalb aus zahlreichen Polygonflächen, deren räumliche Lage durch die Raumkoordinaten der Knotenpunkte des Gittermodells definiert ist. In einer vorteilhaften Ausführungsform der Erfindung werden als Polygonflächen Dreiekke verwendet. Dies bedeutet, daß im Gittermodell jeweils drei Punkte durch Kanten miteinander verbunden sind. Die Verwendung von Dreiecken zur Modellierung der Oberflächen hat den Vorteil, daß die Flächennormale eines Dreiecks durch die Raumkoordinaten der Eckpunkte eindeutig definiert ist, da drei Punkte immer in einer Ebene liegen, während bei Polygonen mit mehr als drei Eckpunkten die Möglichkeit besteht, daß die Eckpunkte nicht exakt in einer Ebene liegen, so daß auch die Flächennormale nicht exakt definiert ist.

Das vorstehend beschriebene Verfahren ist nicht beschränkt auf eine monochrome Darstellung. Vielmehr kann das Verfahren nacheinander oder parallel für mehrere Farben - vorzugsweise die Grundfarben - durchgeführt werden. Hierbei kann auch ein farbabhängiges Reflexions- oder Absorptionsverhalten der Oberfläche berücksichtigt werden.

In einer vorteilhaften Variante der Erfindung ist die Vorrichtung als integrierte Schaltung in einem Prozessorsystem oder auch als selbständiger Prozessor ausgeführt, die an ihrem Eingang einen Parametersatz aufnimmt, der unter anderem die räumliche Lage eines Polygons bestimmt. Am Ausgang werden dann die Raumkoordinaten einzelner Rasterelemente der Polygonfläche sowie der Helligkeitswert der Rasterelemente unter Berücksichtigung einer vorgegebenen Tiefenstruktur ausgegeben. Zur Darstellung der Polygonfläche auf einem Bildschirm müssen die Raumkoordinaten der einzelnen Rasterelemente dann lediglich in herkömmlicher Weise in ein 2-dimensionales Bildschirmkoordinatensystem transformiert werden. Die Schaltung läßt sich somit günstig in bestehende Computer-Grafiksysteme einbinden.

Die erfindungsgemäße Lösung ermöglicht vorteilhaft die Simulation einer Tiefenstruktur bei der Darstellung der Polygonflächen eines Gittermodells. Die erfindungsgemäße Bildverarbeitungsvorrichtung ermöglicht vorteilhaft eine Darstellung der einzelnen Polygonflächen unabhängig voneinander. Dies bedeutet, daß die Darstellung einer Polygonfläche auch ohne die Kenntnis der Daten anderer Polygonflächen möglich ist. Die Bildverarbeitungsvorrichtung kann deshalb vorteilhaft aus mehreren parallel angeordneten Recheneinheiten aufgebaut werden, von denen jede jeweils eine Polygonfläche darstellt. Hierdurch ist vorteilhaft die Einbindung in eine Parallelrechnerarchitektur und damit eine hohe Verarbeitungsgeschwindigkeit möglich.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1        als bevorzugtes Ausführungsbeispiel der Erfindung eine Schaltung zur Simulation einer Tiefenstruktur als Blockschaltbild,

Figur 2        die vierte Recheneinheit aus Figur 1 detailliert als Blockschaltbild,

Figur 3a        ein Dreieck des Gittermodells mit den zugehörigen Parametern als Projektion auf die XY-Ebene,

Figur 3b        die Neigung der Dreiecksfläche zur X-Achse und zur Y-Achse,

Figur 4        ein Schema zur Berechnung einer Tiefenmatrix am Beispiel einer geziegelten Mauer,

Figur 5a        eine das Dreieck umgebende kubische Hüllfläche zur Berechnung des lokalen Reflexionsfaktors bei diffuser Reflexion an dem Rasterelement,

Figur 5b        eine das Dreieck umgebende kubische Hüllfläche zur Berechnung des lokalen Reflexionsfaktors bei Spiegelreflexion an dem Rasterelement,

Figur 6        eine Schaltung zur Nachbildung der in den Figuren 5a bzw. 5b dargestellten kubischen Hüllflächen,

Figur 7        eine Schaltung zur Berechnung der Neigung der Pixelnormale in Abhängigkeit von der Neigung im u-v-Koordinatensystem mit Hilfe von Quaternionen sowie

Figur 8        ein Diagramm zur Erläuterung der Skalierung einer Tiefenstruktur.

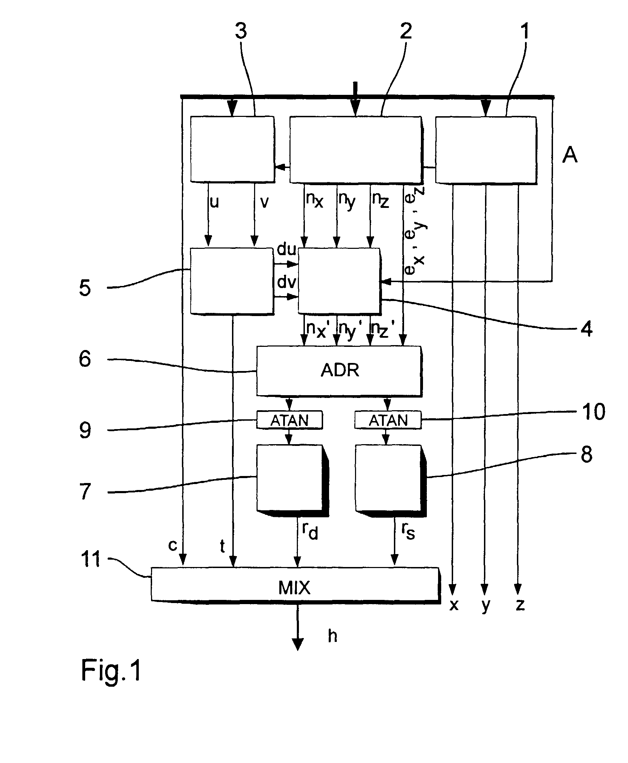

Die in Figur 1 dargestellte Schaltung wird verwendet bei der bildhaften Darstellung von Körpern oder Flächen, die in Form eines Gittermodells vorliegen. Die Oberfläche des darzustellenden Körpers besteht hierbei aus zahlreichen Dreiecken. Das Gittermodell ist also durch die Raumkoordinaten der Eckpunkte definiert.

Die dargestellte Schaltung dient hierbei speziell zur Simulation einer Tiefenstruktur der Oberflächen.

Hierzu erhält die Schaltung als Eingangsgröße für jedes Dreieck einen Parametersatz, der die räumliche Lage dieses Dreiecks sowie die gewünschten Materialeigenschaften der Oberfläche definiert.

So enthält der Parametersatz die Raumkoordinaten ($x_s$, $y_s$, $z_s$) eines Eckpunkts des Dreiecks, die Kanteninkremente $\Delta lu$, $\Delta ru$, $\Delta ld$, $\Delta rd$, die Anzahl der Rasterzeilen $n_1$, $n_2$ des Dreiecks, sowie die Neigung $\Delta zx$ der Dreiecksfläche zur X-Achse und die Neigung $\Delta zy$ der Dreiecksfläche zur Y-Achse. Darüber hinaus enthält der Parametersatz Informationen über die Farbe der Dreiecksoberfläche, das Absorptionsverhalten, die Durchsichtigkeit der Dreiecksfläche und ähnliches. Weiterhin enthält der Parametersatz für jeden Eckpunkt des Dreiecks ein U,V-Koordinatenpaar, das die Position des jeweiligen Eckpunkts in der Tiefenstruktur definiert. Jedem Eckpunkt des Dreiecks ist also durch den Parametersatz ein Punkt der Tiefenstruktur zugeordnet.

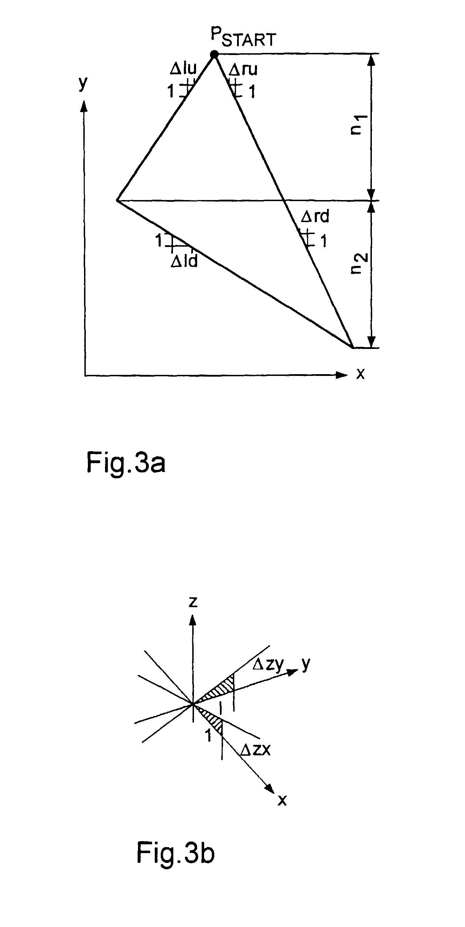

Die Daten des Parametersatzes, die die räumliche Lage des Dreiecks definieren, werden einer ersten Baugruppe 1 zugeführt, die die Dreiecks fläche zunächst in zahlreiche parallele Rasterzeilen und jede Rasterzeile wiederum in zahlreiche Rasterelemente aufteilt. Anschließend werden dann für jedes Rasterelement die Raumkoordinaten berechnet. Die Aufteilung eines Dreiecks in Rasterelemente sowie die Berechnung der Raumkoordinaten der einzelnen Rasterelemente ist detailliert in der Beschreibung zu den Figuren 3a und 3b erläutert.

Der am Eingang der Schaltung anliegende Parametersatz wird auch einer zweiten Baugruppe 2 zugeführt, die daraus die Flächennormale $(n_x, n_y, n_z)^T$ der Dreiecksfläche berechnet. Darüber hinaus berechnet die zweite Recheneinheit 2 aus der vorgegebenen Position des Betrachters und der Position $(x_s, y_s, z_s)$ des Dreiecks den Betrachtungsvektor $(e_x, e_y, e_z)^T$, also die Blickrichtung des Betrachters.

Darüber hinaus wird der Parametersatz einer dritten Baugruppe 3 zugeführt, die aus den U,V-Koordinaten der Eckpunkte des Dreiecks die U,V-Koordinaten der einzelnen Rasterelemente interpoliert. Es wird also für jedes Rasterelement der zugehörige Punkt in der Tiefenstruktur berechnet.

Weiterhin wird eine Matrix **M** berechnet, die die Raumkoordinaten X, Y, Z der einzelnen Rasterelemente auf die U,V-Koordinaten der jeweiligen Rasterelemente abbildet:

$$\begin{bmatrix} u \\ v \end{bmatrix} = \begin{bmatrix} x & y & z \end{bmatrix} \cdot \begin{bmatrix} M_{00} & M_{01} \\ M_{10} & M_{11} \\ M_{20} & M_{21} \end{bmatrix}$$

Der Parametersatz enthält - wie bereits vorstehend beschrieben - für jeden Eckpunkt des Dreiecks die U,V-Koordinaten. Da auch die X,Y,Z-Koordinaten der drei Eckpunkte bekannt sind, ist also ein Gleichungssystem von sechs Gleichungen mit insgesamt sechs Unbekannten $M_{ij}$ gegeben, das auf einfache Weise durch Anwendung der Cramer'schen Regel gelöst wird.

Die Matrix **M** dient zum einen zur Drehung der Tiefenstruktur parallel zur Polygonfläche und zum anderen - wie noch eingehend erläutert wird - zur Berechnung einer weiteren Matrix, die den sich aus der Tiefenstruktur ergebenden Neigungsvektor an der Flächennormale der Polygonfläche ausrichtet.

Die auf diese Weise für jedes Rasterelement gewonnenen U,V-Koordinaten werden einer Zuordnungseinheit 5 zugeführt, die jedem Wertepaar (U,V) jeweils einen die Tiefenstruktur der Oberfläche definierenden Tiefenwert sowie einen die Textur der Oberfläche definierenden Texturwert zuweist.

Das Zuordnungselement weist hierzu zwei zweidimensionale Speichermatrizen - die Texturmatrix und die Tiefenmatrix - auf, die jeweils durch ein U,V-Wertepaar adressiert werden.

Die Texturmatrix definiert ein ebenes Muster, das auf die Oberfläche des Dreiecks aufgeblendet wird. Jedes U,V-Wertepaar adressiert also ein Element der Texturmatrix, das den Helligkeits- oder Farbwert des zugehörigen Rasterelements auf der Oberfläche des Dreiecks bestimmt. Die Helligkeit der Dreiecksoberfläche ist deshalb nicht völlig einheitlich, sondern kann - in Abhängigkeit von dem in der Texturmatrix gespeicherten Muster - von Rasterelement zu Rasterelement schwanken. Hierdurch erscheint die Oberfläche nicht völlig einheitlich und wirkt deshalb wesentlich realistischer. So kann beispielsweise die Maserung einer Holzoberfläche simuliert werden. Wichtig ist in diesem Zusammenhang, daß die Texturmatrix lediglich die Helligkeits- oder Farbverteilung des gewünschten Musters enthält, nicht jedoch eine Tiefenstruktur simuliert. Die Oberfläche des Dreiecks erscheint also zunächst völlig glatt.

Zur Simulation einer Tiefenstruktur, also einer beliebigen Oberflächenrauhigkeit, dient die Tiefenmatrix, die - wie die Texturmatrix - durch das U,V-Wertepaar adressiert wird.

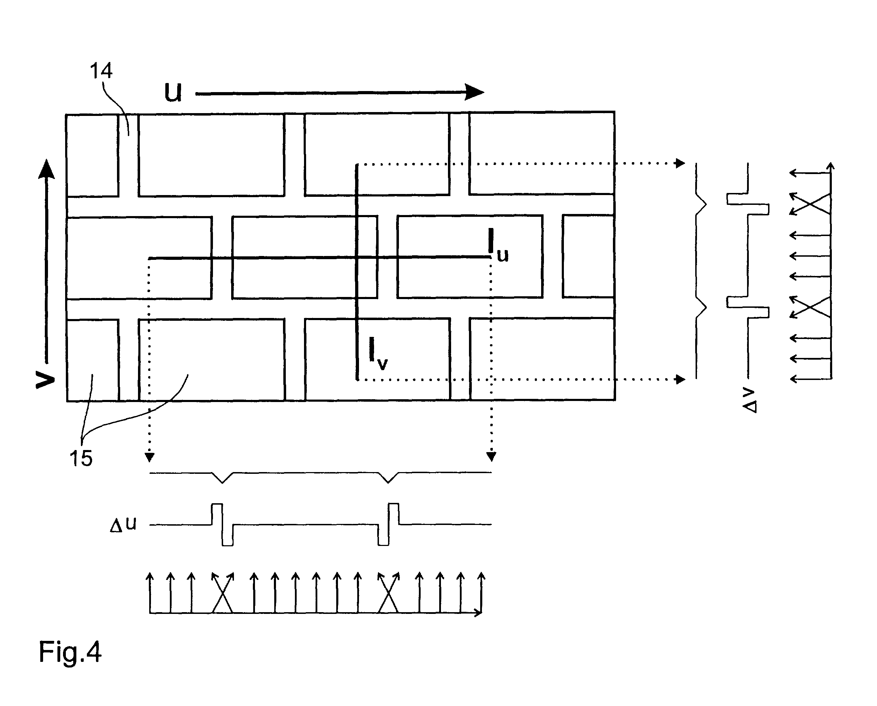

Die Berechnung der Tiefenmatrix aus einer vorgegebenen Oberflächenstruktur ist detailliert in der Beschreibung zu Figur 4 anhand einer geziegelten Mauerwand erklärt.

Entscheidend für die Nachbildung der Tiefenstruktur ist die Ausrichtung der lokalen Flächennormale in den verschiedenen Rasterelementen, da hierdurch das Reflexionsverhalten der Oberfläche bestimmt wird. Die Tiefenmatrix definiert deshalb, wie die Flächennormale an den einzelnen Punkten innerhalb des Tiefenmusters gegenüber der Flächennormale des gesamten Musters geneigt ist. So verläuft die Flächennormale - wie aus Figur 4 ersichtlich - in den Fugen der Ziegelwand nicht senkrecht zu der Wand, sondern schräg. Die Tiefenmatrix definiert also einen Wert $\Delta u$, der die Neigung der lokalen Flächennormale zur U-Achse bestimmt, sowie einen Wert $\Delta v$, der die Neigung zur V-Achse bestimmt.

Da jedes Rasterelement auf ein U,V-Wertepaar abgebildet wird, definiert die Tiefenmatrix also die auf die Oberfläche des Dreiecks aufzuprägende Tiefenstruktur.

Weiterhin weist die Schaltung eine dritte Baugruppe 4 auf, die aus der Flächennormale $(n_x, n_y, n_z)^T$ und den lokalen Neigungswerten $\Delta u$ und $\Delta v$ die Pixelnormale, also die lokale Flächennormale $(n_x', n_y', n_z')$ am Ort jedes Rasterelements berechnet.

Hierzu multipliziert diese Recheneinheit die Abweichungen $\Delta u$ und $\Delta v$ mit einer Abbildungsmatrix **A** und addiert diese zu der Flächennormale $(n_x, n_y, n_z)^T$:

$$\begin{bmatrix} n'_x \\ n'_y \\ n'_z \end{bmatrix} = \begin{bmatrix} n_x \\ n_y \\ n_z \end{bmatrix} + \begin{bmatrix} A_{00} & A_{01} \\ A_{10} & A_{11} \\ A_{20} & A_{21} \end{bmatrix} \cdot \begin{bmatrix} \Delta u \\ \Delta v \end{bmatrix}$$

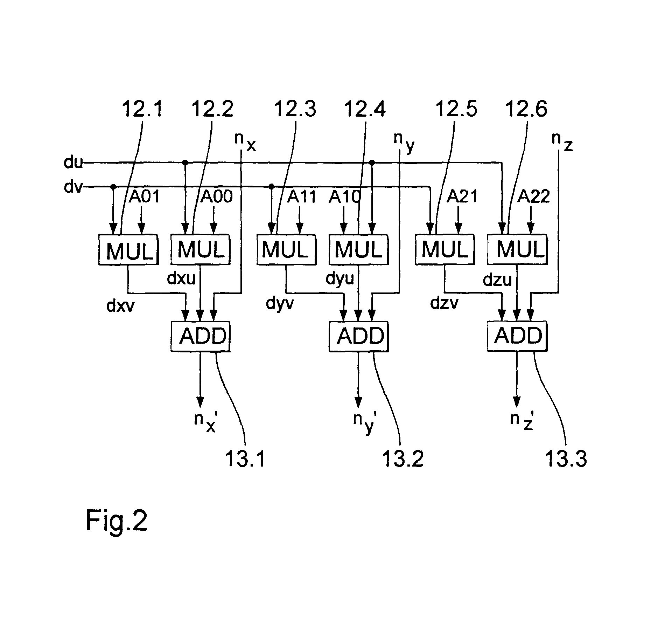

Die Schaltung der vierten Recheneinheit ist detailliert in Figur 2 dargestellt.

Die Rasterelemente eines Dreiecks weisen also entsprechend der in der Tiefenmatrix gespeicherten Tiefenstruktur jeweils eine geneigte lokale Flächennormale - im folgenden als Pixelnormale bezeichnet - auf, so daß die Helligkeit der Rasterelemente aufgrund der Winkelabhängigkeit des Reflexionsverhaltens innerhalb eines Dreiecks schwanken kann. Im Gegensatz zu dem ebenfalls auf die Oberfläche des Dreiecks aufgetragenen ebenen Texturbild hängt die Helligkeit eines Rasterelements jedoch nicht nur von der Lage des Rasterelements innerhalb der Dreiecksfläche ab, sondern auch von der Lage des Beobachters und der Lichtquellen relativ zu der Dreiecksfläche. Bei einem Positionswechsel des Betrachters ändert sich also entsprechend die Wahrnehmung der Tiefenstruktur, während die Wahrnehmung des Texturbildes unverändert bleibt.

Die Berechnung des lokalen Helligkeitswerts erfolgt durch eine vierte Baugruppe 6, die in Abhängigkeit von der Position des Betrachters - gegeben durch den Betrachtungsvektor $(e_x, e_y, e_z)^T$ - und der Pixelnormalen $(n_x', n_y', n_z')$ aus einer dreidimensionalen Reflexionsmatrix den jeweiligen Wert des Reflexionsfaktors ausliest.

In diesem Zusammenhang ist zu unterscheiden zwischen der diffusen Reflexion an dem Rasterelement und der Spiegelreflexion an dem Rasterelement. Es ist also zur Berechnung des Reflexionsfaktors für diffuse Reflexion eine 3-dimensionale Reflexionsmatrix 7 und für die Berechnung des Reflexionsfaktor für Spiegelreflexion eine weitere 3-dimensionale Reflexionsmatrix 8 vorgesehen.

Bei der diffusen Reflexion wird angenommen, daß das Licht gleichmäßig in alle Richtungen abgestrahlt wird, während bei der Spiegelreflexion die Abstrahlung nach den Gesetzen der geometrischen Strahlenoptik erfolgt, wobei Einfallswinkel und Ausfallswinkel gleich sind. Betrachtet man nun nicht einen von der Lichtquelle ausgehenden Lichtstrahl, sondern umgekehrt einen vom Betrachter ausgehenden "Sehstrahl", so wird dieser "Sehstrahl" an dem Rasterelement in Richtung eines Reflexionsvektor R reflektiert. Die Pixelnormale, der Reflexionsvektor und die Betrachtungsrichtung liegen also in einer Ebene, wobei der Winkel zwischen der Pixelnormale und der Betrachtungsrichtung gleich dem Winkel zwischen dem Reflexionsvektor und der Pixelnormale ist.

Für den Reflexionsvektor gilt also in Abhängigkeit von der Pixelnormale $N_U$ und der Betrachtungsrichtung bzw. dem "Sehstrahl" E:

$$\vec{R} = 2 \cdot \vec{N}_U \cdot \left( \vec{N}_U \cdot \vec{E} \right) + \vec{E} \cdot \left( \vec{N}_U \cdot \vec{N}_U \right)$$

also in Komponentenschreibweise:

$$\begin{bmatrix} r_x \\ r_y \\ r_z \end{bmatrix} = 2 \cdot \begin{bmatrix} n_x \\ n_y \\ n_z \end{bmatrix} \cdot \left( n_x \cdot e_x + n_y \cdot e_y + n_z \cdot e_z \right) + \begin{bmatrix} e_x \\ e_y \\ e_z \end{bmatrix} \cdot \left( n_x^2 + n_y^2 + n_z^2 \right)$$

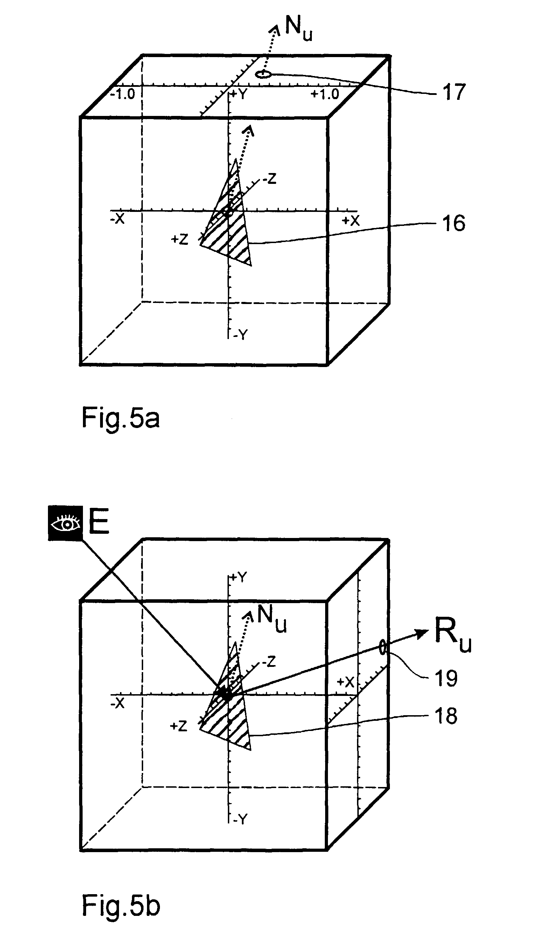

Die Reflexionsmatrix läßt sich als eine kubische Hüllfläche betrachten, in dessen Mitte das Rasterelement liegt. Die Figuren 5a und 5b zeigen eine derartige kubische Hüllfläche. Jedem Oberflächenelement der Hüllfläche ist dabei ein Wert des Reflexionsfaktors zugeordnet.

Zur Berechnung des diffusen Reflexionsfaktors ist deshalb das Flächenelement der kubischen Hüllfläche zu bestimmen, das von der Pixelnormalen oder deren Verlängerung geschnitten wird. Der diesem Flächenelement zugeordnete Wert ist dann der diffuse Reflexionsfaktor.

In gleicher Weise ist zur Berechnung der Spiegelreflexion der Punkt der Hüllfläche zu bestimmen, an dem der Reflexionsvektor oder dessen Verlängerung die Hüllfläche durchstößt. Der diesem Punkt der Hüllfläche zugeordnet Wert definiert dann den Reflexionsfaktor bei Spiegelreflexion.

Die Werte auf der Hüllfläche definieren also die Beleuchtungsumgebung des Dreiecks und entsprechen einer Rundum-Aufnahme der Umgebung aus der Perspektive des Dreiecks. Es ist deshalb vorteilhaft möglich, mehrere Lichtquellen zu simulieren. Auch ist die Simulation beliebig verteilter Lichtquellen möglich. Darüber hinaus kann der Betrachter seine Position beliebig verändern, also durch eine Szenerie virtuell hindurchwandern, wobei sich der Seheindruck des Betrachters automatisch an die veränderte Perspektive anpaßt.

Die kubische Hüllfläche wird - wie bereits vorstehend beschrieben - jeweils durch eine dreidimensionale Reflexionsmatrix 7 bzw. 8 nachgebildet. Die erste Dimension der Reflexionsmatrix kann Werte zwischen 1 und 6 annehmen und gibt an, welche Seitenfläche der Hüllfläche von der Pixelnormalen bzw. dem Reflexionsvektor durchstoßen wird.

Die Adressierung der anderen beiden Dimensionen der Reflexionsmatrix erfolgt in Abhängigkeit von der Position des Schnittpunktes auf der jeweiligen Seitenfläche. Durchstößt die Pixelnormale bzw. der Reflexionsfaktor beispielsweise eine zur XZ-Ebene parallele Seitenfläche der kubischen Hüllfläche, so adressiert die Y-Koordinate des Schnittpunkts die zweite Dimension und die Z-Koordinate des Schnittpunkts die dritte Dimension der Reflexionsmatrix. Die Adressierung erfolgt hierbei nicht direkt durch die Raumkoordinaten des Schnittpunkts, sondern indirekt durch Zwischenschaltung jeweils einer weiteren Recheneinheit 9 bzw. 10, die den Winkel zu der die Seitenfläche durchstoßenden Achse des Koordinatensystems in zwei zueinander rechtwinkligen Ebenen berechnet.

Die Berechnung der Reflexionsfaktoren für diffuse Reflexion und Spiegelreflexion wird detailliert in der Beschreibung zu den Figuren 5a bzw. 5b erläutert.

Aus der Reflexionsmatrix 7 bzw. 8 wird also jeweils ein Reflexionsfaktor $r_d$ bzw. $r_s$ für diffuse Reflexion und Spiegelreflexion ausgelesen. Darüber hinaus stellt die Zuordnungseinheit 5 einen Texturwert t für jedes Rasterelement bereit. Die beiden Reflexionsfaktoren $r_d$ und $r_s$ sowie der Texturwert t werden einer Überblendeinheit 11 zugeführt, die daraus, sowie aus dem Farbwert c der Dreiecksfläche einen Helligkeitswert h berechnet.

Am Ausgang gibt die Schaltung dann die Raumkoordinaten $x_i$, $y_i$, $z_i$ des Rasterelements sowie den berechneten Helligkeitswert h aus.

Zur Darstellung auf einem Bildschirm müssen die Raumkoordinaten des Rasterelements lediglich in Bildschirmkoordinaten umgerechnet werden.

Figur 2 zeigt den inneren Aufbau der vierten Recheneinheit. Die vierte Recheneinheit besteht im wesentlichen aus sechs Multiplizierern 12.1 bis 12.6 und drei Addierern 13.1 bis 13.3, die aus den Neigungskomponenten $\Delta u$ und $\Delta v$, der Transformationsmatrix A und den Komponenten $n_y$, $n_y$, $n_z$ die lokale Flächennormale (Pixelnormale) für jedes Rasterelement des Dreiecks berechnen:

$$\begin{bmatrix} n'_x \\ n'_y \\ n'_z \end{bmatrix} = \begin{bmatrix} n_x \\ n_y \\ n_z \end{bmatrix} + \begin{bmatrix} A_{00} & A_{01} \\ A_{10} & A_{11} \\ A_{20} & A_{21} \end{bmatrix} \cdot \begin{bmatrix} \Delta u \\ \Delta v \end{bmatrix}$$

Hierzu liegen an den Eingängen der Multiplizierer 12.1 bis 12.6 die Koeffizienten $A_{ij}$ der Transformationsmatrix und jeweils eine der Neigungskomponenten $\Delta u$ oder $\Delta v$. Die Ausgangssignale dxv, dxu, dyv, dyu, dzv, dzu der Multiplizierer 12.1 bis 12.6 werden zusammen mit den Komponenten $n_x$, $n_y$, $n_z$ der Flächennormale des Dreiecks den Addierern 13.1 bis 13.3 zugeführt, die daraus die Komponenten $n'_x$, $n'_y$, $n'_z$ der Pixelnormale berechnen.

Wie bereits in der Beschreibung zu Figur 1 erwähnt, erhält die Schaltung an ihrem Eingang einen Parametersatz, der unter anderem die räumliche Lage des darzustellenden Dreiecks bestimmt. Die Figuren 3a und 3b zeigen die Bedeutung dieser Parameter anhand eines Beispiels.

Der Parametersatz enthält unter anderem die Raumkoordinaten $x_s$, $y_s$, $z_s$ eines Eckpunkts $P_{start}$ des Dreiecks. Dieser Eckpunkt dient als Startpunkt und definiert die Position des Dreiecks im Raum, während die Kanteninkremente $\Delta lu$, $\Delta ru$, $\Delta ld$, $\Delta rd$ die Form des Dreiecks sowie die Lage des Dreiecks relativ zu den Koordinatenachsen definieren.

Ausgehend vom Startpunkt $P_{start}$ wird das Dreieck in Rasterzeilen und jede Rasterzeile wiederum in Rasterelemente aufgeteilt. Die einzelnen Rasterzeilen verlaufen dabei jeweils parallel zur X-Achse. Das Kanteninkrement $\Delta lu$ bzw. $\Delta ld$ definiert die Steigung der links des Startpunkts liegenden Dreieckskante relativ zur Y-Achse, während das Kanteninkrement $\Delta ru$ bzw. $\Delta rd$ die Steigung der rechts liegenden Dreieckskante relativ zur Y-Achse definiert. Auf diese Weise lassen sich die Raumkoordinaten von Anfangs- und Endpunkt jeder Rasterzeile berechnen.

Da die Rasterzeilen parallel zur X-Achse verlaufen, ergibt sich die Y-Koordinate sowohl des Anfangspunkts als auch des Endpunkts jeder Rasterzeile aus der Y-Koordinate $y_S$ des Startpunkts und der Nummer der Rasterzeile:

$$y_l = y_s + i \qquad y_r = y_s + i$$

Die X-Koordinate $x_l$ des Anfangspunkte jeder Rasterzeile ergibt sich entsprechend aus der X-Koordinate $x_S$ des Startpunkts $P_{start}$, der Nummer i der Rasterzeile sowie dem Kanteninkrement $\Delta lu$ bzw. $\Delta ld$. Innerhalb der ersten $n_1$ Rasterzeilen wird hierbei das Kanteninkrement $\Delta lu$ und anschließend das Kanteninkrement $\Delta ld$ verwendet.

$$x_l = x_S + \Delta lu \cdot i \qquad \text{für } i \leq n_1$$

$$x_l = x_S + \Delta lu \cdot n_1 + (i - n_1) \cdot \Delta ld \qquad \text{für } n_1 < i \leq n_1 + n_2$$

In gleicher Weise ergibt sich die X-Koordinate $x_r$ des Endpunkts jeder Rasterzeile aus der X-Koordinate $x_S$ des Startpunkts $P_{start}$, der Nummer i der Rasterzeile sowie dem Kanteninkrement $\Delta ru$ bzw. $\Delta rd$. Hierbei wird während der ersten $n_1$ Rasterzeilen das Kanteninkrement $\Delta ru$ und anschließend das Kanteninkrement $\Delta rd$ verwendet:

$$x_r = x_S + \Delta ru \cdot i \qquad \text{für } i \leq n_1$$

$$x_r = x_S + \Delta ru \cdot n_1 + (i - n_1) \cdot \Delta rd \qquad \text{für } n_1 < i \leq n_1 + n_2$$

Die Z-Koordinate $z_l$ des Anfangspunkts ergibt sich aus der Z-Koordinate $z_S$ des Startpunkts, der Nummer der Rasterzeile sowie den Neigungen der Dreiecksfläche zur X-Achse und zur Y-Achse:

$$z_l = z_S + i \cdot \Delta zy + (x_l - x_S) \cdot \Delta zx$$

Die Rasterzeilen werden dann in Rasterelemente aufgeteilt, wobei für jedes Rasterelement aus den bekannten Koordinaten der Anfangs- und Endpunkte der Rasterzeilen die Raumkoordinaten berechnet werden.
Da die Rasterzeilen parallel zur X-Achse verlaufen, ist die Y-Koordinate jedes Rasterelements gleich der Y-Koordinate der zugehörigen Rasterzeile:

$$y_j = y_l$$

Die X-Koordinate jedes Rasterelements ergibt sich aus der X-Koordinate $x_l$ des Anfangspunkts der Rasterzeile, und der Nummer j des Rasterelements in der Rasterzeile:

$$x_j = x_l + j$$

Die Z-Koordinate eines Rasterelements ergibt sich aus der Z-Koordinate $z_l$ des Anfangspunkts der zugehörigen Rasterzeile, der Nummer j des Rasterelements innerhalb der Rasterzeile und der Neigung $\Delta zx$ der Dreiecksfläche relativ zur X-Achse.

$$z_j = z_l + j \cdot \Delta zy$$

Auf diese Weise werden die Raumkoordinaten $x_j$, $y_j$, $z_j$ für jedes Rasterelement der Dreiecksfläche berechnet.
Figur 4 zeigt die Oberfläche einer aus Ziegeln 15 bestehenden Mauerwand sowie die sich aus der Tiefenstruktur der Oberfläche ergebenden Neigungswerte $\Delta u$ bzw. $\Delta v$.
Die Fugen 14 zwischen den Ziegeln 15 stellen eine rinnenförmige Vertiefung in der Oberfläche der Mauerwand. Die Mauerwand ist also nicht exakt eben, sondern weist eine Tiefenstruktur auf.
Unterhalb des Bildes ist ein Querschnitt der Oberfläche entlang der Linie $l_U$ dargestellt. Die obere Linie zeigt den Höhenverlauf H der Oberfläche entlang der Linie $l_u$. Hierbei sind deutlich die rinnenförmigen Vertiefungen zwischen den Ziegeln 15 zu erkennen. Darunter ist die sich aus diesem Oberflächenverlauf ergebende Neigungskomponente Δu dargestellt. Die Neigungskomponente Δu ergibt sich also durch partielle Differentiation des Höhenniveaus H:

$$\Delta u = -\frac{\partial H}{\partial u}$$

Darunter ist schließlich die lokale Flächennormale dargestellt.

Auf der rechten Seiten ist das Oberflächenprofil der Mauerwand als Querschnitt entlang der Linie $I_v$ dargestellt. Daneben ist die sich aus diesem Höhenprofil ergebende Neigungskomponente Δv dargestellt, die sich durch partielle Differentiation des Höhenniveaus errechnet:

$$\Delta v = -\frac{\partial H}{\partial v}$$

Die Neigungskomponenten Δu, Δv bestimmen die Neigung der lokalen Flächennormale gegenüber der Flächennormale der ideal glatten Oberfläche.

Da die Durchführung einer partiellen Differentiation relativ viel Zeit in Anspruch nimmt, werden die entsprechenden Werte für die gewünschte Tiefenstruktur - hier die Mauerwand - vorberechnet und in einer zweidimensionalen Matrix - der sogenannten Tiefenmatrix - abgespeichert. Jedem Punkt der Mauerwand wird also jeweils ein Wert der beiden Neigungskomponenten Δu und Δv zugewiesen.

Die Bestimmung der Neigungskomponenten Δu, Δv erfordert deshalb lediglich einen Lesezugriff auf die Tiefenmatrix, adressiert durch das U,V-Wertepaar.

Der in Figur 5a dargestellte Kubus dient zur Berechnung des Reflexionsfaktors bei diffuser Reflexion an dem Rasterelement.

Bei diffuser Reflexion wird das Licht - wie bereits vorstehend ausgeführt - weitgehend gleichmäßig in alle Richtung abgestrahlt. Die Helligkeit eines Rasterelements ist deshalb nicht abhängig von der Perspektive des Betrachters, sondern wird ausschließlich von der Lage der Pixelnormale relativ zur Beleuchtungsumgebung bestimmt.

Zur Berechnung des Reflexionsfaktors wird der Kubus so positioniert, daß das aktuelle Rasterelement im Mittelpunkt des Kubus liegt. Der Kubus bildet also eine Hüllfläche um das Rasterelement, wobei jedem Flächenelement der Hüllfläche ein Wert für den Reflexionsfaktor zugeordnet ist.

Zur Berechnung des Reflexionsfaktors wird dann der Schnittpunkt 17 der Pixelnormale $N_U$ mit der Hüllfläche bestimmt und der zugehörige Wert der Hüllfläche als Reflexionsfaktor definiert.

Die Werte auf der Hüllfläche definieren also die Beleuchtungsumgebung des Dreiecks 16 und entsprechen einer Rundum-Aufnahme der Umgebung aus der Perspektive des Dreiecks 16. Es ist deshalb vorteilhaft möglich, mehrere Lichtquellen zu simulieren. Auch ist die Simulation beliebig verteilter Lichtquellen möglich.

Der Kubus wird hierbei als 3-dimensionale Matrix realisiert, wobei die erste Dimension der Matrix angibt, welche Seitenfläche des Kubus von der Pixelnormale $N_U$ geschnitten wird, während die beiden anderen Dimensionen die Lage des Schnittpunkts 17 innerhalb der Seitenfläche wiedergeben.

Welche Hüllfläche von der Pixelnormale $N_U$ durchstoßen wird - also die Adressierung der ersten Dimension der Matrix -, hängt lediglich von dem Verhältnis der einzelnen Komponenten der Pixelnormale $N_U$ ab. Ist beispielsweise die X-Komponente betragsmäßig größer als die beiden anderen Komponenten und größer als Null, so durchstößt die Pixelnormale $N_U$ die Seitenfläche der Hüllfläche, die von dem positiven Ast der X-Achse rechtwinklig geschnitten wird und die erste Dimension der Reflexionsmatrix nimmt entsprechend den Wert 1 an.

Allgemein ergibt sich für den Adreßwert $a_1$ der ersten Dimension der Reflexionsmatrix in Abhängigkeit von den Komponenten $n_y$, $n_y$, $n_z$ der Pixelnormale $N_U$:

$$a_1 = \begin{cases} 1 & falls & \max\left[n_x, n_y, n_z\right] = n_x > 0 \\ 2 & falls & \max\left[n_x, n_y, n_z\right] = n_x < 0 \\ 3 & falls & \max\left[n_x, n_y, n_z\right] = n_y > 0 \\ 4 & falls & \max\left[n_x, n_y, n_z\right] = n_y < 0 \\ 5 & falls & \max\left[n_x, n_y, n_z\right] = n_z > 0 \\ 6 & falls & \max\left[n_x, n_y, n_z\right] = n_z < 0 \end{cases}$$

Die Adressierung der anderen beiden Dimensionen $a_2$, $a_3$ der Reflexionsmatrix erfolgt in Abhängigkeit von der Position des Schnittpunktes 17 auf der jeweiligen Seitenfläche. Durchstößt die Pixelnormale bzw. der Reflexionsfaktor beispielsweise eine zur XZ-Ebene parallele Seitenfläche der kubischen Hüllfläche, so adressiert die Y-Koordinate des Schnittpunkts die zweite Dimension und die Z-Koordinate des Schnittpunkts die dritte Dimension der Reflexionsmatrix.

Allgemein gilt für die Adressierung der anderen beiden Dimensionen $a_2$, $a_3$ der Reflexionsmatrix:

$$a_2 = \begin{cases} \arctan\left(\dfrac{n_y}{|n_x|}\right) & falls \quad a_1 = 1\,oder\,2 \\[2ex] \arctan\left(\dfrac{n_x}{|n_y|}\right) & falls \quad a_1 = 3\,oder\,4 \\[2ex] \arctan\left(\dfrac{n_x}{|n_z|}\right) & falls \quad a_1 = 5\,oder\,6 \end{cases} \qquad a_3 = \begin{cases} \arctan\left(\dfrac{n_z}{|n_x|}\right) & falls \quad a_1 = 1\,oder\,2 \\[2ex] \arctan\left(\dfrac{n_z}{|n_y|}\right) & falls \quad a_1 = 3\,oder\,4 \\[2ex] \arctan\left(\dfrac{n_y}{|n_z|}\right) & falls \quad a_1 = 5\,oder\,6 \end{cases}$$

Figur 5b zeigt einen weiteren Kubus, der zur Berechnung des Reflexionsfaktors bei Spiegelreflexion dient.

Bei einer spiegelnden Reflexion an einer Fläche erfolgt die Reflexion nicht gleichmäßig in alle Richtungen, wie bei der vorstehend beschriebenen diffusen Reflexion angenommen wurde, sondern in einer bevorzugten Lichtausfallsrichtung. Diese Lichtausfallsrichtung ergibt sich nach den Gesetzen der geometrischen Strahlenoptik aus der Lage der Flächennormale und der Lichteinfallsrichtung. Ein von einer Lichtquelle ausgehender Lichtstrahl trifft also auf die Fläche und wird an dieser in Richtung der Lichtausfallsrichtung reflektiert, wobei Einfalls- und Ausfallswinkel gegenüber der Flächennormale gleich sind. Betrachtet man nun umgekehrt nicht den von der Lichtquelle ausgehenden Lichtstrahl, sondern einen von dem Betrachter ausgehenden "Sehstrahl", so wird dieser "Sehstrahl" nach den gleichen Gesetzen an der Fläche reflektiert und trifft schließlich auf ein Objekt der Umgebung. Auf diese Weise läßt sich bestimmen, welchen Ausschnitt der Umgebung ein Betrachter bei der Spiegelreflexion an einem Rasterelement wahrnimmt.

Hierzu wird in Abhängigkeit von der Betrachtungsrichtung E und der Lage der Pixelnormale ein Reflexionsvektor $R_U$ berechnet, der dem an dem Rasterelement reflektierten "Sehstrahl" entspricht. Da bei Spiegelreflexion Einfalls- und Ausfallswinkel gleich sind, ergibt sich für den Reflexionsvektor $R_U$ aus der Pixelnormale $N_U$ und dem Betrachtungsvektor E:

$$\vec{R}_U = 2 \cdot \vec{N}_U \cdot \left( \vec{N}_U \cdot \vec{E} \right) + \vec{E} \cdot \left( \vec{N}_U \cdot \vec{N}_U \right)$$

oder in Komponentenschreibweise:

$$\begin{bmatrix} r_x \\ r_y \\ r_z \end{bmatrix} = 2 \cdot \begin{bmatrix} n_x \\ n_y \\ n_z \end{bmatrix} \cdot \left( n_x \cdot e_x + n_y \cdot e_y + n_z \cdot e_z \right) + \begin{bmatrix} e_x \\ e_y \\ e_z \end{bmatrix} \cdot \left( n_x^2 + n_y^2 + n_z^2 \right)$$

Der Kubus wird - wie bereits bei der Berechnung des Reflexionsfaktors bei diffuser Reflexion - so angeordnet, daß das aktuelle Dreieck 18 im Zentrum des Kubus liegt. Der Kubus bildet also ein das Rasterelement umgebende Hüllfläche, wobei jedem Flächenelement der Hüllfläche ein Wert des Reflexionsfaktors zugeordnet ist. Zu Bestimmung des Reflexionsfaktors muß also das Flächenelement der Hüllfläche bestimmt werden, das von dem Reflexionsvektor $R_U$ oder dessen Verlängerung durchstoßen wird. Der diesem Flächenelement zugeordnete Wert ist dann der Reflexionsfaktor.

Die kubischen Hüllfläche gibt also eine Rundum-Aufnahme der Umgebung aus der Perspektive des Rasterelements wieder.

Der Kubus wird hierbei - wie bereits bei der diffusen Reflexion - durch eine dreidimensionale Matrix nachgebildet. Die Adressierung der ersten Dimension erfolgt dabei in Abhängigkeit von der von dem Reflexionsfaktor durchstoßenen Seitenfläche. Für den Adreßwert $a_1$ der ersten Dimension der Matrix gilt:

$$a_1 = \begin{cases} 1 & \textit{falls} & \max\left[r_x, r_y, r_z\right] = r_x > 0 \\ 2 & \textit{falls} & \max\left[r_x, r_y, r_z\right] = r_x < 0 \\ 3 & \textit{falls} & \max\left[r_x, r_y, r_z\right] = r_y > 0 \\ 4 & \textit{falls} & \max\left[r_x, r_y, r_z\right] = r_y < 0 \\ 5 & \textit{falls} & \max\left[r_x, r_y, r_z\right] = r_z > 0 \\ 6 & \textit{falls} & \max\left[r_x, r_y, r_z\right] = r_z < 0 \end{cases}$$

Die Adressierung der anderen beiden Dimensionen der Matrix erfolgt in Abhängigkeit von der Lage des Schnittpunkts 19 innerhalb der von dem Reflexionsvektor $R_U$ durchstoßenen Seitenfläche. Für die Adreßwerte $a_2$, $a_3$ gilt:

$$a_2 = \begin{cases} \arctan\left(\dfrac{r_y}{|r_x|}\right) & \textit{falls} & a_1 = 1\,\textit{oder}\,2 \\[2ex] \arctan\left(\dfrac{r_x}{|r_y|}\right) & \textit{falls} & a_1 = 3\,\textit{oder}\,4 \\[2ex] \arctan\left(\dfrac{r_x}{|r_z|}\right) & \textit{falls} & a_1 = 5\,\textit{oder}\,6 \end{cases} \qquad a_3 = \begin{cases} \arctan\left(\dfrac{r_z}{|r_x|}\right) & \textit{falls} & a_1 = 1\,\textit{oder}\,2 \\[2ex] \arctan\left(\dfrac{r_z}{|r_y|}\right) & \textit{falls} & a_1 = 3\,\textit{oder}\,4 \\[2ex] \arctan\left(\dfrac{r_y}{|r_z|}\right) & \textit{falls} & a_1 = 5\,\textit{oder}\,6 \end{cases}$$

In Abhängigkeit von den Adreßwerten $a_1$, $a_2$, $a_3$ wird dann aus der Matrix der Reflexionsfaktor für Spiegelreflexion ausgelesen, der zusammen mit dem Reflexionsfaktor für diffuse Reflexion sowie dem Texturwert des Rasterelements in die Berechnung der Helligkeit des Rasterelements eingeht.

Vorteilhaft ist hierbei, daß die Perspektive des Betrachters verändert werden kann, ohne daß die Reflexionsmatrix neu berechnet werden muß. Der Betrachter kann deshalb in einer Echt-Zeit-Darstellung seine Perspektive relativ zu dem Modell verändern.

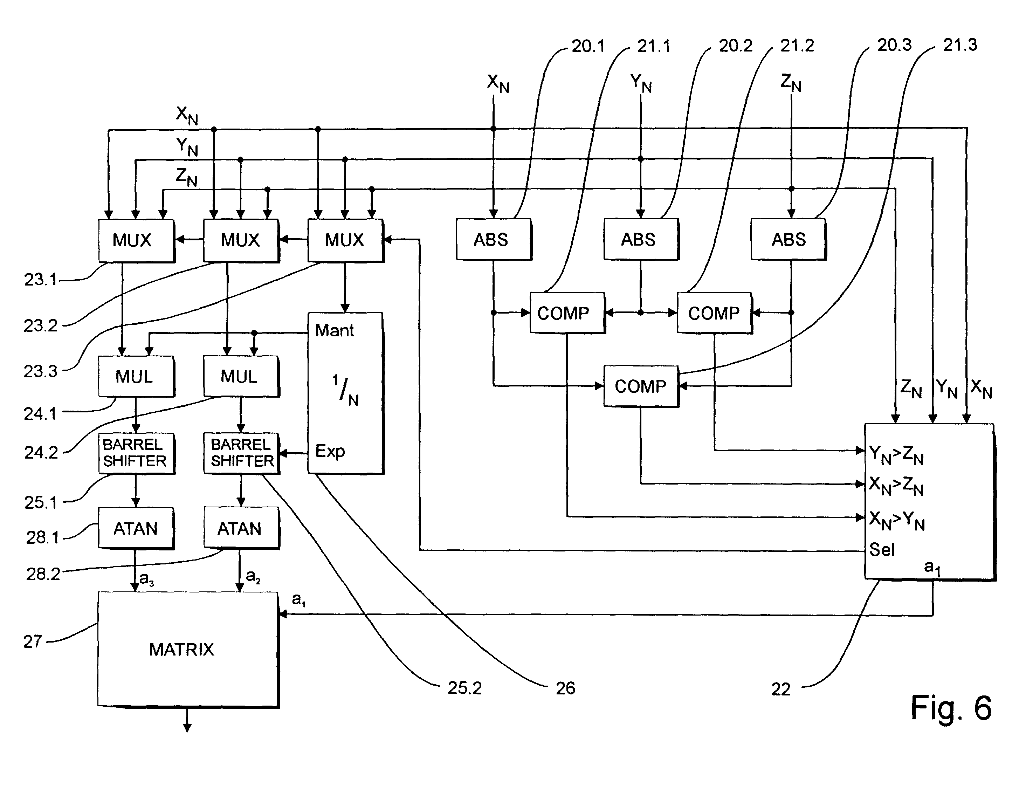

Figur 6 zeigt ein Blockschaltbild einer Schaltung zur Adressierung einer 3-dimensionalen Matrix durch einen Vektor, wobei die 3-dimensionale Matrix eine den Ursprung des Vektors umgebende kubische Hüllfläche nachbildet.

Die dargestellte Schaltung eignet sich also zur Berechnung der Reflexionsfaktoren für diffuse Reflexion oder Spiegelreflexion mit den in Figur 5a bzw. 5b dargestellten Kuben.

Darüber hinaus läßt sich die Schaltung überall dort einsetzen, wo ein Vektor eine 3-dimensionale Matrix adressiert, die eine kubische Hüllfläche nachbildet, also beispielsweise auch in Figur 1 anstelle der Adressierungseinheit 6, der Recheneinheit 9 bzw. 10 und den Matrizen 7 bzw. 8.

Am Eingang nimmt die Schaltung die Raumkoordinaten $x_N$, $y_N$, $z_N$ des adressierenden Vektors auf.

Die Schaltung ermittelt zunächst, welche Seitenfläche der kubischen Hüllfläche der Vektor schneidet. Hierzu wird die betragsmäßig größte Raumkoordinate des adressierenden Vektors bestimmt. Ist beispielsweise die X-Koordinate des Vektors am größten, so schneidet der Vektor die Seitenfläche der kubischen Hüllfläche, die parallel zur YZ-Ebene verläuft.

Die Raumkoordinaten $x_N$, $y_N$, $z_N$ werden deshalb zunächst jeweils einer Recheneinheit 20.1, 20.2 bzw. 20.3 zugeführt, die den Absolutwert der Raumkoordinaten bilden. Anschließend werden die Absolutwerte der Raumkoordinaten - also die Ausgangssignale der Recheneinheiten 20.1, 20.2 und 20.3 - jeweils paarweise drei Komparatoren 21.1, 21.2, 21.3 zugeführt, die die Absolutwerte der Raumkoordinaten vergleichen.

Die Ausgangssignale der Komparatoren 21.1, 21.2, 21.3 werden dann einer Adressierungseinheit 22 zugeführt, die den Adreßwert $a_1$ für die erste Dimension der 3-dimensionalen Matrix 27 berechnet. Hierzu vergleicht die Adressierungseinheit 22 die Ausgangssignale der Komparatoren 21.1, 21.2, 21.3 und errechnet daraus sowie aus den Vorzeichen der Raumkoordinaten den Adreßwert $a_1$ nach folgender Regel:

$$a_1 = \begin{cases} 1 & \textit{falls } x_N \geq y_N \quad \wedge \quad x_N \geq z_N \quad \wedge \quad x_N \geq 0 \\ 2 & \textit{falls } x_N \geq y_N \quad \wedge \quad x_N \geq z_N \quad \wedge \quad x_N < 0 \\ 3 & \textit{falls } y_N \geq x_N \quad \wedge \quad y_N \geq z_N \quad \wedge \quad y_N \geq 0 \\ 4 & \textit{falls } y_N \geq x_N \quad \wedge \quad y_N \geq z_N \quad \wedge \quad y_N < 0 \\ 5 & \textit{falls } z_N \geq y_N \quad \wedge \quad z_N \geq x_N \quad \wedge \quad z_N \geq 0 \\ 6 & \textit{falls } z_N \geq y_N \quad \wedge \quad z_N \geq x_N \quad \wedge \quad z_N \geq 0 \end{cases}$$

Weiterhin ermittelt die Schaltung, an welcher Position der adressierende Vektor die Seitenfläche der kubischen Hüllfläche durchstößt. Die Koordinaten dieses Schnittpunktes dienen zur Adressierung der zweiten und dritten Dimension der Matrix 27.

Hierzu bildet die Schaltung den Quotienten aus jeweils einem der betragsmäßig kleineren Raumkoordinaten und der betragsmäßig größten Raumkoordinate. Die Adressierungseinheit erzeugt deshalb ein Auswahlsignal Sel, das den Multiplexern 23.1, 23.2, 23.3 zugeführt wird.

Der Multiplexer 23.3 wählt die betragsmäßig größte Raumkoordinate aus und führt deren Wert der Recheneinheit 26 zu, die daraus den Kehrwert bildet und getrennt als Mantisse und Exponent ausgibt.

Die beiden anderen Multiplexer 23.1, 23.2 wählen jeweils eine der beiden betragsmäßig kleineren Raumkoordinaten als Zähler aus.

Die Ausgangssignale der Multiplexer 23.1, 23.2 werden dann zusammmen mit der von der Recheneinheit 26 ermittelten Mantisse des Kehrwerts der betragsmäßig größten Raumkoordinate jeweils einem Multiplizierer 24.1, 24.2 zugeführt, der die betragsmäßig kleineren Raumkoordinaten mit der Mantisse des Kehrwerts der betragsmäßig größten Raumkoordinate multipliziert.

Das Ausgangssignal der Multiplizierer 24.1, 24.2 wird zwei Schieberegistern 25.1, 25.2 zugeführt, die eine Multiplikation mit dem von der Recheneinheit 26 berechneten Exponenten durchführen.

Für die Ausgangssignale $a_2$, $a_3$ dieser Adressierungslogik gilt also beispielsweise, falls $x_N$ die betragsmäßig größte Komponente ist:

$$a_2 = \frac{y_N}{x_n} \qquad a_3 = \frac{z_N}{x_N}$$

Die Ausgangssignale $a_2$, $a_3$ adressieren dann die zweite bzw. dritte Dimension der Matrix 27, die beispielsweise als Halbleiterspeicher realisiert ist.

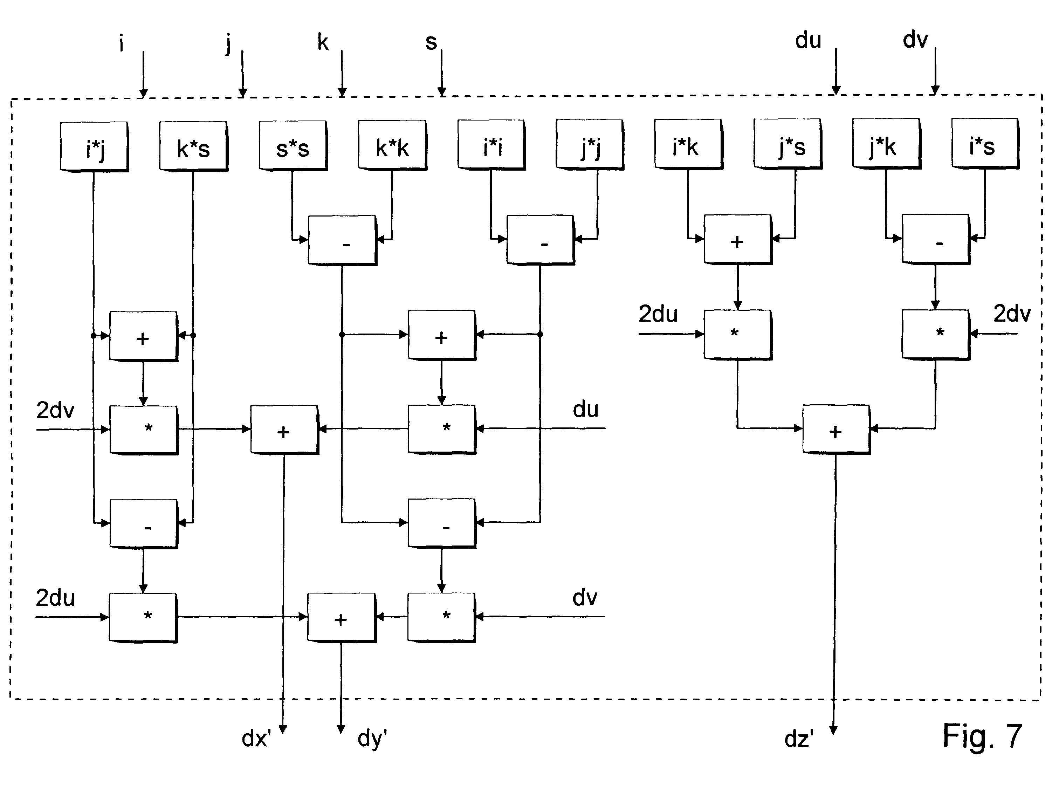

Die in Figur 7 dargestellte Schaltung dient zur Berechnung der durch die simulierte Tiefenstruktur verursachten Neigung der Pixelnormale in Abhängigkeit von den Neigungskomponenten $\Delta u$, $\Delta v$ im U,V-Koordinatensystem.

Als Eingangsgrößen erhält die Schaltung die vier Komponenten i, j, k, s der Quaternion sowie die Neigungskomponenten $\Delta u$, $\Delta v$ im U,V-Koordinatensystem. Die Quaternion hat die Aufgabe, den im U,V-Koordinatensystem ermittelten Neigungsvektor auf die Pixelnormale der glatten Oberfläche im X,Y,Z-Koordinatensystem auszurichten. So muß der Neigungsvektor im X,Y,Z-Koordinatensystem rechtwinklig zur Pixelnormale ausgerichtet sein, damit die Addition dieser beiden Vektoren zu einer Neigung der Pixelnormalen führt.

Am Ausgang gibt die Schaltung dann die Komponenten dx', dy', dz' des Neigungsvektors aus, der zu der Pixelnormalen addiert werden muß.

Die Berechnung der Komponenten dx', dy', dz' des Neigungsvektors erfolgt hierbei nach folgenden Formeln:

$$dx' = \Delta u \cdot (s^2 - k^2 + i^2 - j^2) + 2 \cdot \Delta v \cdot (i \cdot j + k \cdot s)$$

$$dy' = \Delta v \cdot (s^2 - k^2 - i^2 + j^2) + 2 \cdot \Delta u \cdot (i \cdot j - k \cdot s)$$

$$dz' = 2 \cdot \Delta u \cdot (i \cdot k + j \cdot s) + 2 \cdot \Delta v \cdot (j \cdot k - i \cdot s)$$

Hierzu weist die Schaltung 16 Multiplizierer, 6 Addierer und 5 Subtrahierer auf, die die vorstehend als Formel gefaßten Rechenoperationen durchführen.

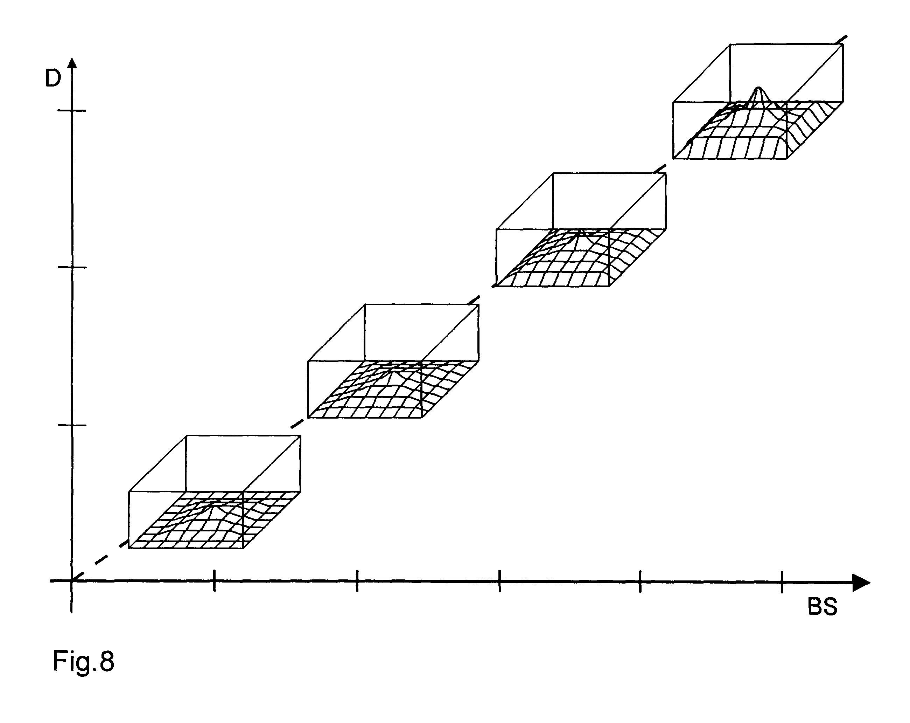

Das in Figur 8 dargestellte Diagramm verdeutlicht die Skalierung einer Tiefenstruktur durch einen Skalierungsfaktor BS (BS - Bump Scale). Auf der Abszisse ist hierbei der Skalierungsfaktor BS aufgetragen, der eine stufenlose Einstellung der Tiefenwirkung der auf der Objektoberfläche simulierten Tiefenstruktur ermöglicht. Auf der Ordinate ist entsprechend ein Wert D aufgetragen, der die räumliche Tiefe der auf der Objektoberfläche erscheinenden Tiefenstruktur wiedergibt.

Zur Veranschaulichung der Abhängigkeit sind hierbei für vier Werte des Skalierungsfaktors BS jeweils die dreidimensionalen Tiefenstrukturbilder dargestellt, die sich aus dem jeweiligen Wert des Skalierungsfaktors BS ergeben. Es ist deutlich sichtbar, daß die Tiefenwirkung des bei der Darstellung auf der Objektoberfläche erscheinenden Tiefenstrukturbildes mit dem Skalierungsfaktor BS zunimmt. Dies wird dadurch erreicht, daß die aus der Tiefenmatrix ausgelesenen Neigungswerte zunächst mit dem Skalierungsfaktor BS multipliziert werden, bevor aus der lokalen Flächennormale der glatten Oberfläche und den jeweiligen Neigungswerten der Oberflächenverlauf unter Berücksichtigung der Tiefenstruktur berechnet wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Bildverarbeitungsverfahren zur Simulation einer Tiefenstruktur bei der Darstellung von Objekten, welche insbesondere aus mindestens einer Polygonfläche bestehen, bei dem

   mittels einer ersten Baugruppe (1) einer Recheneinheit aus einem die Lage der Polygonfläche repräsentierenden vorgegebenen ersten Parametersatz eine vielzahl von Koordinatensätzen (x, y, z, u, v) berechnet wird, die die Lage jeweils eines Rasterelements der Polygonfläche repräsentieren,

   und für jeden Koordinatensatz (x, y, z, u, v)

   • mittels einer zweiten Baugruppe (2) aus dem ersten Parametersatz ein zweiter Parametersatz ($n_x$, $n_y$, $n_z$) berechnet wird, der die Lage der Flächennormale der Polygonfläche ohne Berücksichtigung der Tiefenstruktur repräsentiert,

   • mittels einer dritten Baugruppe (4) aus dem zweiten Parametersatz ($n_x$, $n_y$, $n_z$) und einem Neigungswert (du, dv) ein dritter Parametersatz ($n'_x$, $n'_y$, $n'_z$) berechnet wird, der die Lage der lokalen Flächennormale der Polygonfläche mit Berücksichtigung der Tiefenstruktur repräsentiert,

   • mittels einer vierten Baugruppe (6, 7, 8, 9, 10, 11) in Abhängigkeit von dem dritten Parametersatz ($n'_x$, $n'_y$, $n'_z$) ein die Helligkeit und/oder die Farbe eines Rasterelements repräsentierender und den Eindruck einer Tiefenstruktur erzeugender Wert (h) bestimmt wird,

   wobei

   durch jeden Koordinatensatz (x, y, z, u, v) ein Speicherplatz einer ersten Speichermatrix (5) adressiert wird,

   jeder Speicherplatz der ersten Speichermatrix (5) einen Parametersatz enthält, der die Neigung der lokalen Flächennormale mit Berücksichtigung der Tiefenstruktur relativ zur Flächennormale der Polygonfläche ohne Berücksichtigung der Tiefenstruktur repräsentiert, und

   der Neigungswert (du, dv) aus der ersten Speichermatrix (5) ausgelesen wird.

2. Verfahren nach Anspruch 1, **dadurch gekennzeichnet**, daß die Polygonfläche eben ist und der zweite Parametersatz ($n_x$, $n_y$, $n_z$) die räumliche Lage der Flächennormale der gesamten Polygonfläche repräsentiert.

3. Verfahren nach Anspruch 1, **dadurch gekennzeichnet**,

   daß die Polygonfläche gekrümmt ist und der erste Parametersatz die räumliche Lage der Polygonfläche und der Eckpunktnormalen repräsentiert,

daß der zweite Parametersatz $(n_x, n_y, n_z)$ aus dem ersten Parametersatz und jeweils einem Koordinatensatz $(x, y, z, u, v)$ berechnet wird und die räumliche Lage der lokalen Flächennormale in jeweils einem Rasterelement repräsentiert.

4. Verfahren nach einem der vorhergehenden Ansprüche, **dadurch gekennzeichnet**,

daß der die Helligkeit und/oder die Farbe eines Rasterelements repräsentierende und den Eindruck einer Tiefenstruktur erzeugende Wert (h) mittels der vierten Baugruppe aus dem dritten Parametersatz $(n'_x, n'_y, n'_z)$ und einem vorgegebenen, die Perspektive repräsentierenden vierten Parametersatz $(e_x, e_y, e_z)$ und/oder einem vorgegebenen, die Beleuchtungsverhältnisse repräsentierenden fünften Parametersatz berechnet wird.

5. Verfahren nach einem der vorhergehenden Ansprüche, **dadurch gekennzeichnet**,

daß mittels der vierten Baugruppe für jeden Koordinatensatz $(x, y, z, u, v)$ aus dem dritten Parametersatz $(n'_x, n'_y, n'_z)$ und dem vierten Parametersatz $(e_x, e_y, e_z)$ zwei Winkelwerte berechnet werden, die die Lage der lokalen Flächennormale der Polygonfläche mit Berücksichtigung der Tiefenstruktur relativ zur Blickrichtung des Betrachters repräsentieren, daß durch die beiden Winkelwerte eine zweite Speichermatrix adressiert wird,

daß jeder Speicherplatz der zweiten Speichermatrix einen Wert enthält, der die Helligkeit der Polygonfläche für eine bestimmte Perspektive repräsentiert,

daß der die Helligkeit und/oder die Farbe repräsentierende Wert (h) aus der zweiten Speichermatrix ausgelesen wird.

6. Verfahren nach einem der vorhergehenden Ansprüche, **dadurch gekennzeichnet**,

daß durch den dritten Parametersatz $(n'_x, n'_y, n'_z)$ eine dritte Speichermatrix (7) adressiert wird, die eine ein Rasterelement umgebende kubische Hüllfläche repräsentiert,

daß aus der dritten Speichermatrix (7) ein erster Reflexionswert $(r_d)$ ausgelesen wird, der die durch diffuse Reflexion verursachte Helligkeit eines Rasterelements repräsentiert,

daß der die Helligkeit und/oder die Farbe repräsentierende Wert (h) in Abhängigkeit von dem ersten Reflexionswert $(r_d)$ berechnet wird.

7. Verfahren nach einem der vorhergehenden Ansprüche, **dadurch gekennzeichnet**,

daß aus dem dritten Parametersatz $(n'_x, n'_y, n'_z)$ und dem vierten Parametersatz $(e_x, e_y, e_z)$ und jeweils einem Koordinatensatz $(x, y, z, u, v)$ ein Adreßwert berechnet wird, der die räumliche Lage eines Lichtstrahls $(R_U)$ repräsentiert, der nach der Spiegelreflexion an dem Rasterelement den Betrachter erreicht,

daß durch den Adreßwert eine vierte Speichermatrix (8) adressiert wird, die eine ein Rasterelement umgebende kubische Hüllfläche repräsentiert,

daß aus der vierten Speichermatrix (8) ein zweiter Reflexionswert $(r_s)$ ausgelesen wird, der die durch Spiegelreflexion verursachte Helligkeit eines Rasterelements repräsentiert,

daß der die Helligkeit und/oder die Farbe repräsentierende Wert (h) in Abhängigkeit von dem zweiten Reflexionswert $(r_s)$ berechnet wird.

8. Verfahren nach einem der vorhergehenden Ansprüche, **dadurch gekennzeichnet**, daß die Polygonfläche dreieckig ist.

9. Verfahren nach einem der vorhergehenden Ansprüche, **dadurch gekennzeichnet**, daß unter einer Polygonfläche ein Objekt mit gegenüber der darzustellenden Feinoberflächenstruktur reduzierter, also entfeinerter, Oberflächenstruktur zu verstehen ist.

10. Verfahren nach einem der vorhergehenden Ansprüche, **dadurch gekennzeichnet**, daß der Neigungswert (du, dv) nach dem Auslesen aus der ersten Speichermatrix (5) zur Einstellung der Tiefenwirkung der zu simulierenden Tiefenstruktur mittels eines Multiplizierers mit einem vorgegebenen Skalierungsfaktor (BS) multipliziert wird.

11. Bildverarbeitungsvorrichtung zur Durchführung des Verfahrens nach einem der vorgenannten Ansprüche, mit einer Recheneinheit mit

    einem Eingang zur Aufnahme eines die Lage der Polygonfläche repräsentierenden ersten Parametersatzes,

    einer ersten Baugruppe (1) zur Berechnung einer Vielzahl von die Lage jeweils eines Rasterelements repräsentierenden Koordinatensätzen (x, y, z, u, v) aus dem ersten Parametersatz,

    einer zweiten Baugruppe (2) zur Berechnung eines die Lage der Flächennormale der Polygonfläche ohne Berücksichtigung der Tiefenstruktur repräsentierenden zweiten Parametersatzes ($n_x$, $n_y$, $n_z$) für jeden Koordinatensatz (x, y, z, u, v),

    einer dritten Baugruppe (4) zur Berechnung eines die Lage der lokalen Flächennormale der Polygon fläche mit Berücksichtigung der Tiefenstruktur repräsentierenden dritten Parametersatzes ($n'_x$, $n'_y$, $n'_z$) für jeden Koordinatensatz (x, y, z, u, v) aus dem zweiten Parametersatz ($n_x$, $n_y$, $n_z$) und einem Neigungswert (du, dv),

    einer vierten Baugruppe (6, 7, 8, 9, 10) zur Berechnung eines die Helligkeit und/oder die Farbe jeweils eines Rasterelements repräsentierenden Werts (h) für jeden Koordinatensatz (x, y, z, u, v) in Abhängigkeit von dem dritten Parametersatz ($n'_x$, $n'_y$, $n'_z$),

    wobei,

    zur Bestimmung des Neigungswerts (du, dv) eine erste Speichermatrix (5) mit mehreren Speicherplätzen vorgesehen ist,

    jeder Speicherplatz der ersten Speichermatrix (5) einen Parametersatz (du, dv) enthält, der die Neigung der lokalen Flächennormale der Polygonfläche mit Berücksichtigung der Tiefenstruktur gegenüber der Flächennormale der Polygonfläche ohne Berücksichtigung der Tiefenstruktur repräsentiert, und

    eine erste Adressierungseinheit (3) vorgesehen ist zur Adressierung der ersten Speichermatrix (5) in Abhängigkeit von jeweils einem Koordinatensatz (x, y, z, u, v).

12. Vorrichtung nach Anspruch 11,
**dadurch gekennzeichnet**,

    daß die vierte Baugruppe eine zweite Adressierungseinheit aufweist zur Berechnung zweier Winkelwerte aus dem dritten Parametersatz ($n'_x$, $n'_y$, $n'_z$) und dem vierten Parametersatz ($e_x$, $e_y$, $e_z$), wobei die beiden Winkelwerte die Lage der lokalen Flächennormale mit Berücksichtigung der Tiefenstruktur relativ zur Blickrichtung des Betrachters repräsentieren,

    daß die vierte Baugruppe eine durch die beiden Winkelwerte adressierbare zweite Speichermatrix aufweist,

    daß jeder Speicherplatz der zweiten Speichermatrix einen vorgegebenen Wert enthält, der die Helligkeit und/oder die Farbe der Polygonfläche für eine bestimme Perspektive repräsentiert.

13. Vorrichtung nach Anspruch 11 oder 12, **gekennzeichnet durch**,

    eine dritte Speichermatrix (7) mit zahlreichen Speicherplätzen, wobei jeder Speicherplatz einen Reflexionswert ($r_d$) enthält, der die durch diffuse Reflexion verursachte Helligkeit jeweils eines Rasterelements repräsentiert,

    eine dritte Adressierungseinheit (6, 9) zur Adressierung der dritten Speichermatrix (7) in Abhängigkeit von dem dritten Parametersatz ($n'_x$, $n'_y$, $n'_z$) und zum Auslesen des Reflexionswerts ($r_d$).

14. Vorrichtung nach einem der Ansprüche 11 bis 13,
**gekennzeichnet durch**

eine vierte Adressierungseinheit (6, 10) zur Berechnung eines Adreßwerts, der die räumliche Lage eines nach der Spiegelreflexion an dem Rasterelement den Betrachter erreichenden Lichtstrahls repräsentiert, aus dem dritten Parametersatz ($n'_x$, $n'_y$, $n'_z$) und dem vierten Parametersatz ($e_x$, $e_y$, $e_z$) und jeweils einem Koordinatensatz (x, y, z, u, v),

einer der vierten Adressierungseinheit (6, 10) nachgeschalteten und durch den Adreßwert adressierbaren vierten Speichermatrix (8), die Werte ($r_s$) enthält, die die durch Spiegelreflexion verursachte Helligkeit der Rasterelemente repräsentieren.

15. Vorrichtung nach Anspruch 13 oder 14, **dadurch gekennzeichnet**, daß die vierte Baugruppe eine Uberblendeinheit (11) aufweist zur Berechnung des die Helligkeit und/oder die Farbe repräsentierenden Wertes (h) in Abhängigkeit von dem ersten Reflexionswert ($r_d$) und/oder dem zweiten Reflexionswert ($r_s$).

16. Vorrichtung nach einem der Ansprüche 11 bis 15, **dadurch gekennzeichnet**, daß der ersten Speichermatrix (5) und der dritten Baugruppe (4) zur Skalierung der Neigungswerte (du, dv) zwecks Einstellung der Tiefenwirkung ein Multiplizierer nachgeschaltet ist.

17. Vorrichtung nach einem der Ansprüche 11 bis 16,
**dadurch gekennzeichnet**,

daß zur Simulation einer dynamischen Tiefenstruktur mehrere Speichermatrizen vorgesehen sind, die jeweils die Neigungswerte (du, dv) einer Momentaufnahme der Tiefenstruktur enthalten,

daß zur sequentiellen Auswahl jeweils einer der zur Tiefenstruktursimulation dienenden Speichermatrizen eine Auswahleinheit vorgesehen ist.

18. Vorrichtung nach einem der vorhergehenden Ansprüche,
**dadurch gekennzeichnet**,

daß zur dynamischen Textursimulation mehrere Speichermatrizen vorgesehen sind, die eine Momentaufnahme des Texturbildes wiedergebende Farb- und/oder Helligkeitswerte enthalten,

daß zur sequentiellen Auswahl jeweils einer der zur Textursimulation dienenden Speichermatrizen eine Auswahleinheit vorgesehen ist.

19. Vorrichtung nach einem der vorhergehenden Ansprüche, **dadurch gekennzeichnet**, daß die zur Textursimulation dienende Speichermatrix zur Erzeugung eines dynamischen Texturbildes mit einem Video- oder Computer-Grafiksystem verbunden ist.

## Claims

1. An image processing method for simulating a structure in relief during the representation of object, which consist of at least one polygonal surface, in which

a plurality of coordinate sets (x, y, z, u, v) representing the position respectively of one raster element of the polygonal surface is calculated by means of a first module (1) of an arithmetic-logic unit from a predetermined first set of parameters representing the position of the polygonal surface,
and for each set of coordinates (x, y, z, u, v)

- a second set of parameters ($n_x$, $n_y$, $n_z$) representing the position of the surface normal of the polygonal surface without taking into consideration the structure in relief is calculated by means of a second module (2) from the first set of parameters,
- a third set of parameters ($n'_x$, $n'_y$, $n'_z$) representing the position of the local surface normal of the polygonal surface taking into consideration the structure in relief is calculated by means of a third module (4) from the second set of parameters ($n_x$, $n_y$, $n_z$),
- a value (h) representing the brightness and/or the colour of a raster element and producing the impression of a structure in relief is determined by means of a fourth module (6, 7, 8, 9, 10, 11) in dependence on the third set of parameters ($n'_x$, $n'_y$, $n'_z$),

whereby

a memory location of a first memory matrix (5) is addressed by each set of coordinates (x, y, z, u, v), each memory location of the first memory matrix (5) contains a set of parameters representing the inclination of the local surface normal taking into consideration the structure in relief in relation to the surface normal of the polygonal surface without taking into consideration the structure in relief, and the inclination value (du, dv) is read out of the first memory matrix (5).

2. A method according to Claim 1,
**characterised in that** the polygonal surface is flat and the second set of parameters ($n_x$, $n_y$, $n_z$) represents the spatial position of the surface normal of the entire polygonal surface.

3. A method according to Claim 1,
**characterised in that** the polygonal surface is curved and the first set of parameters represents the spatial position of the polygonal surface and the corner point normals,

**in that** the second set of parameters ($n_x$, $n_y$, $n_z$) is calculated from the first set of parameters and a respective set of coordinates (x, y, z, u, v) and represents the spatial position of the local surface normal in respectively one raster element.

4. A method according to one of the preceding Claims,
**characterised in that** the value (h) representing the brightness and/or the colour of a raster element and producing the impression of a structure in relief is calculated by means of the fourth module from the third set of parameters ($n'_x$, $n'_y$, $n'_z$) and a predetermined fourth set of parameters ($e_x$, $e_y$, $e_z$) representing the perspective and/or a predetermined fifth set of parameters representing the illumination conditions.

5. A method according to one of the preceding Claims,
**characterised in that** two angle values representing the position of the local surface normal of the polygonal surface taking into consideration the structure in relief in relation to the viewing direction of the observer are calculated by means of the fourth module for each set of coordinates (x, y, z, u, v) from the third set of parameters ($n'_x$, $n'_y$, $n'_z$) and the fourth set of parameters ($e_x$, $e_y$, $e_z$),

**in that** a second memory matrix is addressed by the two angle values,
**in that** each memory location of the second memory matrix contains a value representing the brightness of the polygonal surface for a determined perspective,
**in that** the value (h) representing the brightness and/or the colour is read out of the second memory matrix.

6. A method according to one of the preceding Claims,
**characterised in that** a third memory matrix (7) representing a cubic envelope surface surrounding a raster element is addressed by the third set of parameters ($n'_x$, $n'_y$, $n'_z$)

**in that** a first reflection value ($r_d$) representing the brightness of a raster element caused by diffuse reflection is read out of the third memory matrix (7),
**in that** the value (h) representing the brightness and/or the colour is calculated in dependence on the first reflection value ($r_d$).

7. A method according to one of the preceding Claims,
**characterised in that** an address value representing the spatial position of a light beam ($R_U$) which reaches the observer after the mirror reflection at the raster element is calculated from the third set of parameters ($n'_x$, $n'_y$, $n'_z$) and the fourth set of parameters ($e_x$, $e_y$, $e_z$) and one respective set of parameters (x, y, z, u, v),

**in that** a fourth memory matrix (8) representing a cubic envelope surface surrounding a raster element is addressed by the address value,
**in that** a second reflection value ($r_s$) representing the brightness of a raster element caused by mirror reflection is read out of the fourth memory matrix (8),
**in that** the value (h) representing the brightness and/or the colour is calculated in dependence on the second

reflection value ($r_s$).

8. A method according to one of the preceding Claims,
**characterised in that** the polygonal surface is triangular.

9. A method according to one of the preceding Claims,
**characterised in that** by a polygonal surface is to be understood an object having a surface structure which is reduced, i.e. less refined, in comparison with the fine surface structure to be represented.

10. A method according to one of the preceding Claims,
**characterised in that** after being read out from the first memory matrix (5) the inclination value (du, dv) is multiplied by means of a multiplier with a preset scaling factor (BS) to adjust the relief action of the structure in relief to be simulated.

11. An image processing apparatus for performing the method according to one of the preceding Claims, having an arithmetic-logic unit with

> one input for receiving a first set of parameters representing the position of the polygonal surface, a first module (1) for calculating a plurality of sets of coordinates (x, y, z, u, v) representing the position of a respective raster element from the first set of parameters,
> a second module (2) for calculating a second set of parameters ($n_x$, $n_y$, $n_z$), representing the position of the surface normal of the polygonal surface without taking into consideration the structure in relief, for each set of coordinates (x, y, z, u, v),
> a third module (4) for calculating a third set of parameters ($n'_x$, $n'_y$, $n'_z$), representing the position of the local surface normal of the polygonal surface taking into consideration the structure in relief, for each set of coordinates (x, y, z, u, v) from the second set of parameters ($n_x$, $n_y$, $n_z$) and an inclination value,
> a fourth module (6, 7, 8, 9, 10) for calculating a value (h) representing the brightness and/or the colour of a respective raster element for each set of coordinates (x, y, z, u, v) in dependence on the third set of parameters ($n'_x$, $n'_y$, $n'_z$),
>
> whereby
>
> to determine the inclination value (du, dv) a first memory matrix (5) having several memory locations is provided,
> each memory location of the first memory matrix (5) contains a set of parameters (du, dv) representing the inclination of the local surface normal of the polygonal surface taking into consideration the structure in relief in comparison with the surface normal of the polygonal surface without taking into consideration the structure in relief, and
> a first addressing unit (3) is provided to address the first memory matrix (5) in dependence on respectively one set of coordinates (x, y, z, u, v).

12. An apparatus according to Claim 11,
**characterised in that** the fourth module comprises a second addressing unit for calculating two angle values from the third set of parameters ($n'_x$, $n'_y$, $n'_z$) and the fourth set of parameters ($e_x$, $e_y$, $e_z$), the two angle values representing the position of the local surface normal taking into consideration the structure in relief in relation to the viewing direction of the observer,

> **in that** the fourth module comprises a second memory matrix that can be addressed by the two angle values,
> **in that** each memory location of the second memory matrix contains a predetermined value representing the brightness and/or the colour of the polygonal surface for a determined perspective.

13. An apparatus according to Claim 11 or 12,
**characterised by**

> a third memory matrix (7) having numerous memory locations, each memory location containing a reflection value ($r_d$) representing the brightness of one respective raster element caused by diffuse reflection,
> a third addressing unit (6, 9) for addressing the third memory matrix (7) in dependence on the third set of parameters ($n'_x$, $n'_y$, $n'_z$) and for reading out the reflection value ($r_d$).

**14.** An apparatus according to one of Claims 11 to 13,
**characterised by**

a fourth addressing unit (6, 10) for calculating an address value representing the spatial position of a beam of light reaching the observer after the mirror reflection at the raster element from the third set of parameters ($n'_x$, $n'_y$, $n'_z$) and the fourth set of parameters ($e_x$, $e_y$, $e_z$) and respectively one set of coordinates (x, y, z, u, v), a fourth memory matrix (8) that is connected after the fourth addressing unit (6, 10) and can be addressed by the address value, which matrix contains values ($r_s$) representing the brightness of the raster element caused by mirror reflection.

**15.** An apparatus according to Claim 13 or 14,
**characterised in that** the fourth module comprises a lap-dissolve unit (11) for calculating the value (h) representing the brightness and/or the colour in dependence on the first reflection value ($r_d$) and/or the second reflection value ($r_s$).

**16.** An apparatus according to one of Claims 11 to 15,
**characterised in that** a multiplier is connected after the first memory matrix (5) and the third module (4) to scale the inclination values (du, dv) for the purpose of adjusting the relief action.

**17.** An apparatus according to one of Claims 11 to 16,
**characterised in that** several memory matrices each containing the inclination values (du, dv) of an instantaneous recording of the structure in relief are provided for the simulation of a dynamic structure in relief,

**in that** a selection unit is provided for the sequential selection of respectively one of the memory matrices serving for the simulation of the structure in relief.

**18.** An apparatus according to one of the preceding Claims,
**characterised in that** several memory matrices containing colour and/or brightness values reproducing an instantaneous recording of the texture image are provided for the dynamic simulation of the texture,

**in that** a selection unit is provided for the sequential selection of respectively one of the memory matrices serving for the simulation of the texture.

**19.** An apparatus according to one of the preceding Claims,
**characterised in that** the memory matrix used for simulating the texture is connected to a video or computer graphics system to produce a dynamic texture image.

**Revendications**

**1.** Procédé de traitement d'images pour la simulation d'une structure à relief lors de la représentation d'objets, qui sont constitués notamment par une surface polygonale, selon lequel
une multiplicité d'ensembles de coordonnées (x,y,z,u,v), qui représentent la position respectivement d'un élément de réseau de la surface polygonale, est calculée à l'aide d'un premier module (1) d'une unité de calcul, à partir d'un premier ensemble prédéterminé de paramètres représentant la position de la surface polygonale, et pour chaque ensemble de coordonnées (x,y,z,u,v,)

- un second ensemble de paramètres ($n_x$,$n_y$,$n_z$) qui représentent la position de la normale à la surface polygonale sans tenir compte de la structure à relief, est calculé à l'aide d'un second module (2), à partir du premier ensemble de paramètres,
- un troisième ensemble de paramètres ($n'_x$,$n'_y$,$n'_z$), qui représente la position de la normale locale à la surface polygonale en tenant compte de la structure à relief, est calculé au moyen d'un troisième module (4) à partir du second ensemble de paramètres ($n_x$,$n_y$,$n_z$) et d'une valeur d'inclinaison (du,dv),
- une valeur (h), qui représente la luminosité et/ou la couleur d'un élément de trame et produit l'impression d'une structure à relief, est déterminée au moyen d'un quatrième module (6,7,8,9,10,11) en fonction du troisième ensemble de paramètres ($n'_x$,$n'_y$,$n'_z$),

selon lequel

un emplacement de mémoire d'une première matrice de mémoire (5) est adressé par chaque ensemble de coordonnées (x,y,z,u,v,),

chaque emplacement de la première matrice de mémoire (5) contient un ensemble de paramètres, qui représente l'inclinaison de la normale locale à la surface en tenant compte de la structure à relief, par rapport à la normale à la surface polygonale sans tenir compte de la structure à relief, et

la valeur d'inclinaison (du,dv) est lue à partir de la première matrice de mémoire (5).

2. Procédé selon la revendication 1, caractérisé en ce que la surface polygonale est plane et le second ensemble de paramètres $(n_x,n_y,n_z)$ représente la position spatiale de la normale à l'ensemble de la surface polygonale.

3. Procédé selon la revendication 1, caractérisé en ce

que la surface polygonale est courbe et que le premier ensemble de paramètres représente la position spatiale de la surface polygonale et des normales aux sommets,

que le second ensemble de paramètres $(n_x,n_y,n_z)$ est calculé à partir du premier ensemble de paramètres et respectivement à partir d'un ensemble de coordonnées (x,y,z,u,v) et que la position spatiale de la normale locale à la surface est représentée dans un élément de trame respectif.

4. Procédé selon l'une des revendications précédentes, caractérisé en ce

que la valeur (h), qui représente la luminosité/ou la couleur d'un élément de trame et fournit l'impression d'une structure à relief, est calculée au moyen du quatrième module à partir du troisième ensemble de paramètres $(n'_x,n'_y,n'_z)$ et d'un quatrième ensemble prédéterminé de paramètres $(e_x,e_y,e_z)$, qui représente la perspective, et/ou à partir d'un cinquième ensemble prédéterminé de paramètres, qui représente les conditions d'éclairement.

5. Procédé selon l'une des revendications précédentes, caractérisé en ce

qu'à l'aide du quatrième module est calculé, pour chaque ensemble de coordonnées (x,y,z,u,v), et ce à partir du troisième ensemble de paramètres $(n'_x,n'_y,n'_z)$ et du quatrième ensemble de paramètres $(e_x,e_y,e_z)$, deux valeurs angulaires, qui représentent la position de la normale locale à la surface polygonale en tenant compte de la structure à relief par rapport à la direction d'observation de l'observateur,

qu'une seconde matrice de mémoire est adressée par les deux valeurs angulaires,

que chaque emplacement de mémoire la seconde matrice de mémoire contient une valeur, qui représente la luminosité de la surface polygonale pour une perspective déterminée,

que la valeur (h) représentant la luminosité et/ou la couleur est lue à partir de la seconde matrice de mémoire.

6. Procédé selon l'une des revendications précédentes, caractérisé en ce

que la troisième matrice de mémoire (7), qui représente une surface enveloppe cubique entourant un élément de trame, est adressée par le troisième ensemble de paramètres $(n'_x,n'_y,n'_z)$,

qu'une première valeur de réflexion $(r_d)$, qui représente la luminosité d'un élément de trame, produite par réflexion diffuse, est lue à partir de la troisième matrice de mémoire (7),

que la valeur (h), qui représente la luminosité et/ou la couleur, est calculée en fonction de la première valeur de réflexion $(r_d)$.

7. Procédé selon l'une des revendications précédentes, caractérisé en ce

qu'une valeur d'adresse, qui représente la position spatiale d'un faisceau de lumière $(R_U)$ qui atteint l'observateur après réflexion spéculaire sur l'élément de trame, est calculée à partir du troisième ensemble de paramètres $(n'_x,n'_y,n'_v)$ et du quatrième ensemble de paramètres $(e_x,e_y,e_z)$ et respectivement d'un ensemble de coordonnées (x,y,z,u,v),

qu'une quatrième matrice de mémoire (8), qui représente une surface enveloppe cubique entourant un élément de trame, est adressée par la valeur d'adresse,

qu'une seconde valeur de réflexion $(r_s)$, qui représente la luminosité, provoquée par la réflexion spéculaire, d'un élément de trame, est lue à partir de la quatrième matrice de mémoire (8),

que la valeur (h), qui représente la luminosité et/ou la couleur, est calculée en fonction de la seconde valeur de réflexion $(r_s)$.

8. Procédé selon l'une des revendications précédentes, caractérisé en ce que la surface polygonale est triangulaire.

9. Procédé selon l'une des revendications précédentes, caractérisé en ce que sous l'expression surface polygonale, il faut comprendre qu'il s'agit d'un objet possédant une structure de surface qui est réduite, c'est-à-dire affinée, par rapport à la structure fine de surface devant être représentée.

10. Procédé selon l'une des revendications précédentes, caractérisé en ce que la valeur d'inclinaison (du,dv) est multipliée, après lecture à partir de la première matrice de mémoire (5), pour le réglage de l'effet de profondeur de la structure à relief devant être simulée, par un facteur prédéterminé de cadrage d'échelle (BS) au moyen d'un multiplicateur.

11. Dispositif de traitement d'images pour la mise en oeuvre du procédé selon l'une des revendications précédentes, comprenant une unité de calcul comportant :

une entrée pour recevoir un premier ensemble de paramètres représentant la position de la surface polygonale,
un premier module (1) pour calculer une multiplicité d'ensembles de coordonnées (x,y,z,u,v) représentant la position d'un élément respectif de trame, à partir du premier ensemble de paramètres,
un second module (2) pour calculer un second ensemble de paramètres ($n_x$,$n_y$,$n_z$), représentant la normale à la surface polygonale sans prendre en compte la structure à relief, pour chaque ensemble de coordonnées (x,y,z,u,v),
un troisième module (4) pour calculer un troisième ensemble de paramètres ($n'_x$,$n'_y$,$n'_z$), qui représente la normale locale à la surface polygonale en tenant compte de la structure à relief, pour ensemble de coordonnées (x,y,z,u,v) à partir du second ensemble de paramètres ($n_x$,$n_y$,$n_z$) et d'une valeur d'inclinaison (du,dv),
un quatrième module (6,7,8,9,10) pour calculer une valeur (h), qui représente la luminosité et/ou la couleur d'un élément de trame respectif, pour chaque ensemble de coordonnées (x,y,z,u,v) en fonction du troisième ensemble de paramètres ($n'_x$,$n'_y$,$n'_z$),

dans lequel

une première matrice de mémoire (5) comportant plusieurs emplacements de mémoire est prévue pour déterminer la valeur d'inclinaison (du,dv),
chaque emplacement de mémoire de la première matrice de mémoire (5) contient un ensemble de paramètres (du,dv), qui représente l'inclinaison de la normale locale à la surface polygonale en tenant compte de la structure à relief, par rapport à la normale à la surface polygonale sans tenir compte de la structure à relief, et
il est prévu une première unité d'adressage (3) pour réaliser l'adressage de la première matrice de mémoire (5) en fonction d'un ensemble respectif de coordonnées (x,y,z,u,v).

12. Dispositif selon la revendication 11, caractérisé en ce

que le quatrième module comporte une seconde unité d'adressage pour le calcul de deux valeurs angulaires à partir du troisième ensemble de paramètres ($n'_x$,$n'_y$,$n'_z$) et à partir du quatrième ensemble de paramètres ($e_x$,$e_y$,$e_z$), les deux valeurs angulaires représentant la position de la normale locale à la surface en tenant compte de la structure à relief par rapport à la direction d'observation de l'observateur,
que le troisième module comporte une seconde matrice de mémoire adressable par les deux valeurs angulaires,
que chaque emplacement de mémoire de la seconde matrice de mémoire contient une valeur prédéterminée, qui représente la luminosité et/ou la couleur de la surface polygonale pour une perspective déterminée.

13. Dispositif selon la revendication 11 ou 12, caractérisé par

une troisième matrice de mémoire (7) comportant de nombreux emplacements de mémoire, chaque emplacement de mémoire contenant une valeur de réflexion ($r_d$), qui représente la luminosité, provoquée par une réflexion diffuse, d'un élément de trame respectif,
une troisième unité d'adressage (6,9) pour l'adressage de la troisième matrice de mémoire (7) en fonction du troisième ensemble de paramètres ($n'_x$,$n'_y$,$n'_z$) et pour la lecture de la valeur de réflexion ($r_d$).

14. Dispositif selon l'une des revendications 11 à 13, caractérisé par

une quatrième unité d'adressage (6,10) pour le calcul d'une valeur d'adresse qui représente la position spatiale d'un faisceau de lumière, qui atteint l'observateur après une réflexion spéculaire sur l'élément de trame, à partir du troisième ensemble de paramètres ($n'_x$,$n'_y$,$n'_z$) et du quatrième ensemble de paramètres ($e_x$,$e_y$,$e_z$) et respectivement d'un ensemble de coordonnées (x,y,z,u,v,),

une quatrième matrice de mémoire (8), qui est branchée en aval de la quatrième unité d'adressage (6,10) et peut être adressée par la valeur d'adresse et qui contient des valeurs ($r_s$) qui représentent la luminosité des éléments de trame, qui est produite par réflexion spéculaire.

15. Dispositif selon la revendication 13 ou 14, caractérisé en ce que le quatrième module comporte une unité (11) de mixage pour le calcul de la valeur (h) représentant la luminosité et/ou la couleur, en fonction de la première valeur de réflexion ($r_d$) et/ou la seconde valeur de réflexion ($r_s$).

16. Dispositif selon l'une des revendications 11 à 15, caractérisé en ce que le multiplicateur est branché en aval de la première matrice de mémoire (5) et du troisième module (4) pour réaliser le cadrage d'échelle des valeurs d'inclinaison (du,dv) pour réaliser le réglage de l'effet de profondeur.

17. Dispositif selon l'une des revendications 11 à 16, caractérisé en ce

que pour simulation d'une structure dynamique à relief il est prévu plusieurs matrices de mémoire, qui contiennent respectivement les valeurs d'inclinaison (du,dv) d'un enregistrement instantané de la structure à relief, qu'une unité de sélection est prévue pour la sélection séquentielle respectivement de l'une des matrices de mémoire utilisée pour la simulation de la structure à relief.

18. Dispositif selon l'une des revendications précédentes, caractérisé en ce

que pour la simulation dynamique de la texture, il est prévu plusieurs matrices de mémoire, qui contiennent des valeurs de couleur et/ou de luminosité reproduisant un enregistrement instantané de l'image de la texture, qu'une unité de sélection est prévue pour la sélection séquentielle respectivement de l'une des matrices de mémoire utilisées pour la simulation de la texture.

19. Dispositif selon l'une des revendications précédentes, caractérisé en ce que la matrice de mémoire utilisée pour la simulation de la texture est reliée à un système graphique vidéo ou un système graphique d'ordinateur pour la production d'une image de texture dynamique.

Fig.1

Fig.2

Fig.3a

Fig.3b

Fig.4

Fig.5a

Fig.5b

Fig. 6

EP 0 846 309 B1

36

Fig. 7

Fig.8